(19) Europäisches Patentamt / European Patent Office / Office européen des brevets

(11) **EP 2 140 286 B1**

(12) **EUROPÄISCHE PATENTSCHRIFT**

(45) Veröffentlichungstag und Bekanntmachung des Hinweises auf die Patenterteilung:
**17.11.2010 Patentblatt 2010/46**

(21) Anmeldenummer: **09716198.8**

(22) Anmeldetag: **14.04.2009**

(51) Int Cl.:
*G01S 7/486* (2006.01)   *G01S 7/497* (2006.01)

(86) Internationale Anmeldenummer:
**PCT/AT2009/000146**

(87) Internationale Veröffentlichungsnummer:
**WO 2009/129552 (29.10.2009 Gazette 2009/44)**

(54) **VORRICHTUNG UND VERFAHREN ZUM MESSEN DES EMPFANGSZEITPUNKTS EINES IMPULSES**

APPARATUS AND METHOD FOR MEASUREMENT OF THE RECEPTION TIME OF A PULSE

DISPOSITIF ET PROCÉDÉ DE MESURE DE L'INSTANT DE RÉCEPTION D'UNE IMPULSION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.04.2008 AT 6372008**

(43) Veröffentlichungstag der Anmeldung:
**06.01.2010 Patentblatt 2010/01**

(73) Patentinhaber: **Riegl Laser Measurement Systems Gmbh**
**3580 Horn (AT)**

(72) Erfinder:
• **ULLRICH, Andreas**
  **A-3003 Gablitz (AT)**
• **PFENNIGBAUER, Martin**
  **A-3430 Tulln (AT)**

• **SCHUBERT, Walter**
  **A-3830 Waidhofen (AT)**
• **ZIERLINGER, Wolfgang**
  **A-3495 Rohrendorf (AT)**
• **HOFBAUER, Andreas**
  **A-3910 Zwetti (AT)**
• **EDERER, Gerhard**
  **A-3841 Windigsteig (AT)**

(74) Vertreter: **Weiser, Andreas**
**Patentanwalt**
**Kopfgasse 7**
**1130 Wien (AT)**

(56) Entgegenhaltungen:
**EP-A- 1 043 602**    **EP-A- 1 329 739**
**EP-A- 1 912 078**    **DE-A1- 19 611 233**
**DE-A1-102005 033 403**

**Beschreibung**

Die vorliegende Erfindung betrifft eine Vorrichtung zum Messen des Empfangszeitpunkts eines Impulses in einem Empfangssystem, das zumindest einen Empfangskanal mit nicht-linearem Übertragungsverhalten enthält, welcher an seinem Ausgang ein Empfangssignal liefert.

Die Erfindung betrifft ferner eine Vorrichtung zum Messen des Empfangszeitpunkts eines Impulses von hohem Dynamikumfang in einem Empfangssystem, das zumindest zwei parallele Empfangskanäle mit unterschiedlicher Empfindlichkeit enthält, welche an ihren Ausgängen einen Satz zeitparalleler Empfangssignale liefern.

Im weiteren bezieht sich die Erfindung auch auf Verfahren zum Messen des Empfangszeitpunkts eines Impulses in derartigen Systemen.

Die exakte Messung des Empfangszeitpunktes eines Impulses ist in der Vermessungstechnik, beispielsweise zur Entfernungsbestimmung mittels Messung der Laufzeit eines optischen Impulses, von enormer praktischer Bedeutung. Bereits ein Zeitmeßfehler von 1 ns entspricht hier einem Entfernungsmeßfehler von 30 cm, was für hochpräzise Anforderungen inakzeptabel ist. Andere Präzisionsanwendungen liegen beispielsweise in der Satellitennavigation, bei welcher der Empfangszeitpunkt von Satellitenfunkimpulsen hochgenau in einem globalen Zeitmaßstab bestimmt werden muß.

Aufgrund der Bandbegrenzung üblicher Sende- und Empfangssysteme und wechselnder Eigenschaften des zwischenliegenden Übertragungsweges sind in einem realen Empfangssystem empfangene Impulse - selbst wenn sie ursprünglich als ideale Rechteckimpulse erzeugt wurden - stets einer gewissen Verzerrung ihrer Impulsform unterworfen, was die Festlegung eines genauen Empfangszeitpunkts erschwert. Für Entfernungsauflösungen im Millimeterbereich ist beispielsweise eine Zeitauflösung im Pikosekundenbereich erforderlich, die bei derart verzerrten Impulsen mit einer klassischen Schwellwerterkennung der ansteigenden oder abfallenden Impulsflanke nicht erreichbar ist. Es wurden daher bereits verfeinerte Verfahren vorgeschlagen, wie das Heranziehen des Schwerpunkts eines Empfangsimpulses als Empfangszeitpunkt, das Vergleichen des Impulses mit einer Gauß'schen Impulsform ("Gauß-Fit") od.dgl., welche Verfahren eine zwar höhere, aber durchaus noch verbesserungsfähige Zeitauflösung haben. Des Weiteren sind Verfahren zum Vergleich mit zu vor ermittelten Referenzfunktionen aus EP 1 034 602 A2, DE 10 2005 033 403 A1 und DE 196 11 233 A1 bekannt.

Der Einsatz der bekannten Verfahren für die Messung von Entfernungen mittels Impulslaufzeitmessung wird zusätzlich noch dadurch erschwert, daß die an einem Ziel reflektierten Impulse ("Echoimpulse") - gleichgültig ob es sich dabei um optische, Funk- oder akustische Impulse handelt - je nach Entfernung und Reflektivität ("schwarz", "weiß" oder sogar "hochreflektierend") des Ziels einen extrem großen Amplitudendynamikbereich einnehmen können, z.B. von über 60 dB in der optischen Leistung bzw. über 120 dB im elektrischen Ausgangssignal einer Photodiode. Empfangssysteme, welche einen derart großen Dynamikbereich verarbeiten können, enthalten in der Regel komprimierende, d.h. stark nicht-lineare Komponenten im Empfangskanal, und/oder es müssen mehrere parallele Empfangskanäle mit unterschiedlicher Eingangsempfindlichkeit vorgesehen werden, wie aus EP 1 329 739 A2 bekannt, um das Empfangssignal auf einzelne leichter weiterzuverarbeitende Dynamikbereiche aufzuteilen. Beide Maßnahmen führen zu einer weiteren Verzerrung der Impulsform im Empfangssystem, welche die genaue Festlegung des Empfangszeitpunkts noch weiter erschwert.

Die Erfindung setzt sich zum Ziel, die genannten Nachteile des Standes der Technik zu überwinden und Vorrichtungen und Verfahren zum Messen des Empfangszeitpunkts eines Impulses zu schaffen, welche eine verbesserte Genauigkeit haben, u.zw. insbesondere für Impulse mit hohem Dynamikumfang.

Dieses Ziel wird in einem ersten Aspekt der Erfindung mit einer Vorrichtung zum Messen des Empfangszeitpunkts eines Impulses in einem Empfangssystem erreicht, das zumindest einen Empfangskanal mit nicht-linearem Übertragungsverhalten enthält, welcher an seinem Ausgang ein Empfangssignal liefert, und die sich durch einen Speicher, in dem die Empfangssignale von Referenzimpulsen vorgegebener unterschiedlicher Amplitude als Referenzsignale bezogen auf einen Zeitmaßstab vorliegen, und eine an das Empfangssystem und den Speicher angeschlossene Auswerteeinrichtung auszeichnet, welche ein Empfangssignal mit jedem Referenzsignal unter variierendem Zeitversatz vergleicht, um jenes Referenzsignal und jenen Zeitversatz zu ermitteln, bei denen die Vergleichsabweichung minimal ist, und diesen Zeitversatz als Empfangszeitpunkt bezüglich des Zeitmaßstabs ausgibt.

Die Erfindung berücksichtigt erstmals das Verhalten von realen Empfangssystemen bei Empfangsimpulsen unterschiedlicher Amplitude durch Heranziehung der damit einhergehenden unterschiedlichen Impulsverformungen zur Bestimmung des Empfangszeitpunkts. Durch "Einpassen" des Empfangssignals in eine das Dynamikverhalten des Empfangssystems repräsentierende Amplitudenschar von Referenzsignalen, die sog. "Signaturfläche" des Empfangsystems, läßt sich erstmals eine wesentlich genauere Bestimmung der Zeitlage des Empfangssignals und damit Festlegung des Empfangszeitpunkts des Impulses erreichen als mit allen bisher bekannten Verfahren. Die Signaturfläche ist für jedes individuelle Empfangssystem charakteristisch, wodurch auch Serienstreuungsfehler vermieden werden können.

Eine besonders vorteilhafte Ausführungsform der Erfindung besteht in einer Vorrichtung zum Messen des Empfangszeitpunkts eines Impulses von hohem Dynamikumfang in einem Empfangssystem, das zumindest zwei parallele Empfangskanäle mit unterschiedlicher Empfindlichkeit enthält, welche an ihren Ausgängen einen Satz zeitparalleler Empfangssignale liefern, und die sich durch einen Speicher, in dem die Sätze von Empfangssignalen von Referenzimpulsen vorgegebener unterschiedlicher Amplitude als Referenzsätze bezogen auf einen Zeitmaßstab vorliegen, und eine an das Empfangssystem und den Speicher angeschlossene Auswerteeinrichtung auszeichnet, welche einen Satz von Empfangssignalen mit jedem Referenzsatz unter variierendem Zeitversatz vergleicht, um jenen Referenzsatz und Zeitversatz zu ermitteln, bei denen die Vergleichsabweichung minimal ist, und diesen Zeitversatz als Empfangszeitpunkt bezüglich des Zeitmaßstabs ausgibt.

Diese Ausführungsform erweitert das Konzept der Erfindung auf Empfangssysteme mit mehreren Kanälen mit unterschiedlichen Dynamikbereichen. Die Erfindung beruht auf der Erkenntnis, daß in dynamikgesplitteten Empfangskanälen ein und derselbe Empfangsimpuls zu zeitparallelen, jedoch unterschiedlich verformten Impulsformen führt, welche jeweils auf die zuvor genannte Art und Weise in system- und kanalspezifische Signaturflächen eingepaßt werden können. Durch die kombinierte Auswertung aller Kanäle mit Hilfe eines gemeinsamen Abweichungskriteriums ergibt sich in Summe eine nochmalige signifikante Verbesserung der Treffsicherheit und damit Genauigkeit der Empfangszeitpunktsbestimmung.

Die erfindungsgemäßen Vorrichtungen eignen sich bevorzugt für Empfangssysteme, bei denen der bzw. die Empfangskanäle analoger und der Speicher und die Auswerteeinrichtung digitaler Art sind, wobei am Ausgang jedes Empfangskanals ein Analog/Digital-Wandler liegt. Die Dynamikanpassung erfolgt damit zeitunkritisch auf analoge Art, während die Eigenschaften des analogen Teils im digitalen Teil ausgewertet werden können.

Gemäß einer besonders vorteilhaften Variante der Erfindung wird vorgesehen, daß die Referenzsignale bzw. Referenzsätze in dem Speicher in einer hohen ersten Zeitauflösung vorliegen, das bzw. die Empfangssignale eines Impulses mit einer geringen zweiten Zeitauflösung abgetastet sind, und die Auswerteeinrichtung den Zeitversatz in den Auflösungsschritten der hohen ersten Zeitauflösung variiert.

Dadurch kann mit einer für den Echtzeitbetrieb geeigneten geringen Abtastrate von z.B. 500 MSamples/s (entspricht einer geringen Zeitauflösung von 2 ns) eine wesentlich höhere Zeitauflösung bei der Bestimmung des Empfangszeitpunkts erreicht werden. Letztere ist im wesentlichen nur durch den Speicherplatz, die Rechenleistung und das Signal/Rausch-Verhältnis begrenzt, die für die Verarbeitung der Referenzsignale und -sätze zur Verfügung stehen, und kann durchaus das Tausendfache und mehr betragen, z.B. 500 GSamples/s entsprechend einer hohen Zeitauflösung von 2 ps.

Demgemäß liegt bevorzugt die genannte erste (hohe) Zeitauflösung in der Größenordnung von Pikosekunden (ps) und die genannte zweite (geringe) Zeitauflösung in der Größenordnung von Nanosekunden (ns).

Bevorzugt ist der genannte Zeitmaßstab die Weltzeit, wodurch die Vorrichtungen der Erfindung für die absolute Messung des Empfangszeitpunkts eines Impulses eingesetzt werden können, z.B. in Satellitennavigationsempfängern.

Alternativ können die Vorrichtungen der Erfindung zum Messen der Laufzeit eines Impulses von einem Sendesystem zu einem Empfangssystem eingesetzt werden, indem bevorzugt der Zeitmaßstab auf den Absendezeitpunkt des Impulses vom Sendesystem bezogen wird, um aus dem ermittelten Empfangszeitpunkt die Laufzeit zu erhalten.

Ein weiterer Vorteil der Erfindung besteht darin, daß sie als Nebenprodukt auch einen Meßwert über die Amplitude eines Impulses liefern kann. Zu diesem Zweck wird in vorteilhafter Weise vorgesehen, daß der Speicher zu jedem Referenzsignal bzw. Referenzsatz auch die Amplitude des zugehörigen Referenzimpulses enthält und die Auswerteeinrichtung die Amplitude jenes Referenzimpulses, welcher zum ermittelten Referenzsignal bzw. Referenzsatz gehört, als Amplitude des Impulses ausgibt. Die Erfindung ermöglicht damit mit denselben Mitteln gleichzeitig die Bestimmung des Empfangszeitpunktes und der Amplitude eines Impulses.

Bevorzugt gibt die Auswerteeinrichtung für einen gemessenen Empfangszeitpunkt auch die zugehörige Vergleichsabweichung aus, sodaß die Vorrichtung gleich auch ein Maß über die Qualität ihrer Meßwerte mitliefert.

In weiteren bevorzugten Ausführungsformen können die erfindungsgemäßen Vorrichtungen jeweils zumindest einen Sensor enthalten, welcher einen Betriebszustand eines oder mehrerer Empfangskanäle mißt und an seinem Ausgang gleichsam als weiteres Empfangssignal bereitstellt, wobei der Speicher solch weitere Empfangssignale der Referenzimpulse als weitere Referenzsignale enthält, und wobei die Auswerteeinrichtung bei dem genannten Vergleich auch ein solch weiteres Empfangssignal mit den weiteren Referenzsignalen vergleicht und in die Ermittlung der Vergleichsabweichung einbezieht.

Auf diese Weise werden zusätzlich zu den Empfangssignalen auch Kriterien über die Empfangskanäle als "weitere Empfangssignale" erhalten und als zusätzliche Vergleichskriterien beim Einpassen der Empfangssignale in die Signaturflächen verwendet, was die Genauigkeit der Empfangszeitpunktsbestimmung noch weiter verbessert.

Eine andere vorteilhafte Ausführungsform der Erfindung zeichnet sich dadurch aus, daß die Vorrichtung zumindest einen Sensor enthält, welcher die Betriebstemperatur eines oder mehrerer Empfangskanäle mißt, der Speicher Referenzsignale bzw. Referenzsätze für verschiedene Betriebstemperaturen enthält, und die Auswerteeinrichtung daraus die für die jeweils aktuelle Betriebstemperatur gültigen Referenzsignale bzw. Referenzsätze ermittelt, erforderlichenfalls durch Inter- oder Extrapolation, und bei dem genannten Vergleich verwendet. Damit wird eine thermische Kompensation und nochmalige Erhöhung der Meßgenauigkeit erreicht.

Das Einpassen des Empfangssignals in eine Referenzsignalschar bzw. Signaturfläche ("Minimalwertvergleich") kann mit Hilfe jedes in der Technik bekannten Matching- bzw. Korrelationsverfahrens erfolgen. Bevorzugt wird die Ermittlung der minimalen Vergleichsabweichung mittels eines Least-Squares-Verfahrens durchgeführt, welches ein stabiles Kriterium liefert.

Dabei kann bevorzugt der Speicher insbesondere auch Gewichtungswerte für die Referenzsignale bzw. Referenzsätze enthalten, welche in das Least-Squares-Verfahren Eingang finden, um Feinabstimmungen vornehmen zu können.

In einem zweiten Aspekt erreicht die Erfindung ihre Ziele mit einem Verfahren zum Messen des Empfangszeitpunkts eines Impulses in einem Empfangssystem, das zumindest einen Empfangskanal mit nicht-linearem Übertragungsverhalten enthält, welcher an seinem Ausgang ein Empfangssignal liefert, wobei das Verfahren sich auszeichnet durch die Schritte

Zurverfügungstellen der Empfangssignale von Referenzimpulsen vorgegebener unterschiedlicher Amplitude als Referenzsignale bezogen auf einen Zeitmaßstab,

Vergleichen eines Empfangssignals mit jedem Referenzsignal unter variierendem Zeitversatz, um jenes Referenzsignal und jenen Zeitversatz zu ermitteln, bei denen die Vergleichsabweichung minimal ist, und

Ausgeben dieses Zeitversatzes als Empfangszeitpunkt bezüglich des Zeitmaßstabs.

Eine besonders vorteilhafte Variante der Erfindung ist ein Verfahren zum Messen des Empfangszeitpunkts eines Impulses von hohem Dynamikumfang in einem Empfangssystem, das zumindest zwei parallele Empfangskanäle mit unterschiedlicher Empfindlichkeit enthält, welche an ihren Ausgängen einen Satz zeitparalleler Empfangssignale liefern, wobei das Verfahren sich auszeichnet durch die Schritte

Zurverfügungstellen der Sätze von Empfangssignalen von Referenzimpulsen vorgegebener unterschiedlicher Amplitude als Referenzsätze bezogen auf einen Zeitmaßstab,

Vergleichen eines Satzes von Empfangssignalen mit jedem Referenzsatz unter variierendem Zeitversatz, um jenen Referenzsatz und Zeitversatz zu ermitteln, bei denen die Vergleichsabweichung minimal ist, und

Ausgeben dieses Zeitversatzes als Empfangszeitpunkt bezüglich des Zeitmaßstabs.

Hinsichtlich der Vorteile der erfindungsgemäßen Verfahren wird auf die obigen Erläuterungen zu den Vorrichtungen verwiesen.

Besonders vorteilhaft ist es, wenn die Referenzsignale bzw. Referenzsätze in einer hohen ersten Zeitauflösung zur Verfügung gestellt werden, das bzw. die Empfangssignale mit einer geringen zweiten Zeitauflösung abgetastet werden, und beim Vergleichen der Zeitversatz in den Auflösungsschritten der hohen ersten Zeitauflösung variiert wird.

Die Erzeugung der Referenzsignale kann auf bevorzugte Weise dadurch erreicht werden, daß mehrere gleichartige und in den Auflösungsschritten einer hohen Zeitauflösung zeitversetzte Referenzimpulsen verwendet werden, deren Empfangssignale mit einer geringen Zeitauflösung abgetastet und kämmend zum Referenzsignal zusammengesetzt werden.

Das genannte Zeitversetzen der Referenzimpulse in den Schritten der hohen Zeitauflösung kann beispielsweise durch entsprechend phasenverschobenes Triggern der Aussendung der Referenzimpulse oder durch Verändern der Länge ihres Übertragungswegs, beispielsweise durch Verstellen eines Reflexionsziels, auf einfache Art und Weise erreicht werden.

Eine noch höhere Meßgenauigkeit wird erreicht, wenn gemäß einem weiteren bevorzugten Merkmal der Erfindung das zusammengesetzte Referenzsignal durch Einfügen von Interpolationswerten auf eine noch höhere Zeitauflösung gebracht wird.

Weitere Merkmale und Vorteile der Erfindung ergeben sich aus der nachfolgenden Beschreibung ihrer bevorzugten Ausführungsformen, welche auf die begleitenden Zeichnungen bezug nimmt, in denen zeigen:

Fig. 1 ein Blockschaltbild einer ersten Ausführungsform der Vorrichtung der Erfindung mit einem Empfangskanal;

Fig. 2 eine Schar von Referenzimpulsen unterschiedlicher Amplitude;

Fig. 3 eine Schar von Referenzsignalen, wie sie als Empfangssignale am Ausgang eines nicht-linearen Empfangskanals in Antwort auf die Referenzimpulse von Fig. 2 erhalten werden und eine Signaturfläche aufspannen;

Fig. 4 das Einpassen der Abtastwerte eines Empfangssignals in eine Referenzsignalschar (Signaturfläche) unter variierendem Zeit- und Amplitudenindexversatz;

Fig. 5 ein Blockschaltbild einer zweiten Ausführungsform der Vorrichtung der Erfindung mit einem Empfangskanal;

Fig. 6 das Verfahren zur Erzeugung eines hochaufgelösten Referenzsignals in vier aufeinanderfolgenden Verfahrensstufen;

Fig. 7 ein Blockschaltbild einer dritten Ausführungsform der Vorrichtung der Erfindung mit mehreren Empfangskanälen;

Fig. 8 den Schritt des Einpassens der Abtastwerte eines Mehrkanal-Satzes von Empfangssignalen in einen Mehrkanal-Satz von Referenzsignal-Scharen (Signaturflächen) unter variierendem Zeit- und Amplitudenindexversatz;

Fig. 9 eine erste Variante eines mehrkanaligen Empfangssystems in elektrischer Blockschaltbildform;

Fig. 10 eine zweite Variante eines mehrkanaligen Empfangssystems in opto-elektrischer Blockschaltbildform;

Fig. 11 die Signaturflächen des unteren und des mittleren Kanals von Fig. 8 in der Draufsicht mit Graustufenkodierung der Amplitudenwerte; und

Fig. 12 Gewichtungswertflächen für die Signaturflächen von Fig. 11 in der Draufsicht mit Graustufenkodierung der Gewichtungswerte.

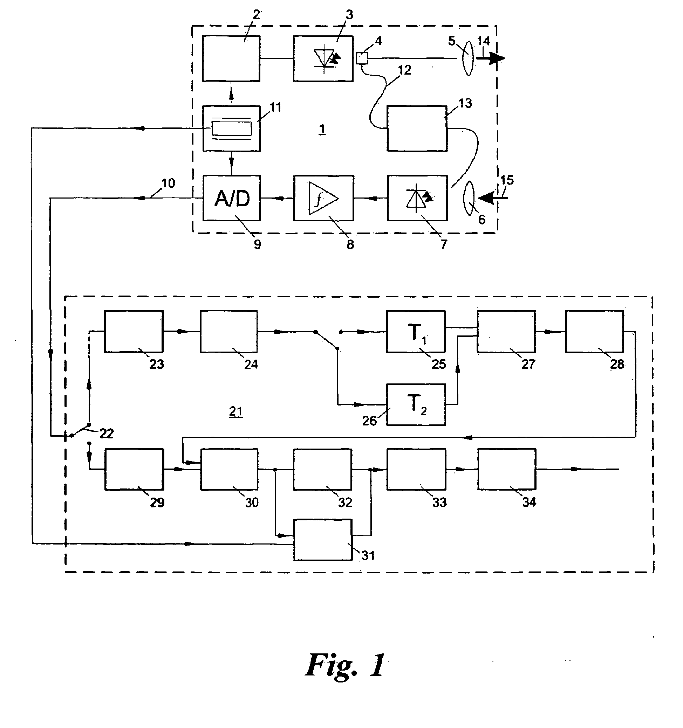

In Fig. 1 ist mit 1 ein Laser-Entfernungsmesser bezeichnet, der einen Impulsgeber 2 umfaßt. Der Impulsgeber 2 steuert eine Laserquelle 3 an, welche einen optischen Impuls aussendet, wenn sie mit einem elektrischen Triggerimpuls angesteuert wird. Der Laserstrahl wird durch eine Optik 5 gebündelt, in das Meßfeld ausgesandt (Pfeil 14) und an einem im Meßfeld befindlichen Ziel, im allgemeinen diffus, gestreut. Ein Teil der gestreuten Strahlung gelangt zurück zum Entfernungsmesser 1 (Pfeil 15) und wird durch ein Objektiv 6 auf eine Photodiode 7 fokussiert. Zur Erzielung einer hohen Empfindlichkeit des Entfernungsmessers wird vorzugsweise eine Lawinenphotodiode (avalanche photo diode, APD) eingesetzt. Der auf die Photodiode 7 auftreffende optische Impuls wird in einen elektrischen Impuls umgesetzt. Der Photodiode 7 sind ein Verstärker (mit Filter) 8 nachgeschaltet.

Da sich je nach Entfernung des Zieles und seiner Reflektivität die empfangenen optischen Impulse um mehrere Größenordnungen unterscheiden können, weist der Verstärker 8 im allgemeinen eine nicht-lineare Charakteristik auf, durch welche die Dynamik der elektrischen Impulse begrenzt wird. Diese Impulse werden in einem Analog/Digital-Wandler 9 digitalisiert. Die einem Impuls entsprechenden Abtastwerte werden über eine digitale Schnittstelle 10 ausgegeben und in einer Auswerteeinrichtung 21 ausgewertet. Der Analog/Digital-Wandler 9 wird durch einen Taktgenerator 11 getaktet. Der Taktgenerator 11 kann auch den Impulsgeber 2 triggern.

Wird als Laser 3 eine Laserdiode eingesetzt, so gibt es eine fixe, exakte zeitliche Beziehung zwischen dem elektrischen Ausgangsimpuls des Impulsgebers 2 und dem optischen Laserimpuls. Die Impulslaufzeit und damit die Entfernung zum Ziel kann somit direkt aus der zeitlichen Position des elektrischen Impulses des Impulsgebers 2 und der zeitlichen Position des empfangenen Echoimpulses ermittelt werden.

Zur Erzielung großer Reichweiten des Entfernungsmessers ist es erforderlich, Laserquellen mit größerer Leistung einzusetzen. Hierzu bieten sich sog. gepumpte Laser an, insbesondere diodengepumpte Laser. Da bei diesen Lasertypen der optische Impuls spontan ausgelöst wird, fehlt hier die exakte zeitliche Beziehung zwischen den elektrischen Pulsen des Impulsgebers 2 und den vom Laser ausgesandten optischen Impulsen. In einem solchen Fall erübrigt es sich, den Impulsgeber 2 durch den Taktgenerator 11 zu triggern.

Unabhängig von der eingesetzten Laserquelle kann zur Ermittlung des exakten Zeitpunkts der Aussendung des optischen Impulses der Photodiode 7 ein mittels eines optischen Elements 4, beispielsweise eines Strahlteilerwürfels, aus dem Sendestrahl ausgekoppelter kleiner Anteil des Laserimpulses über einen Lichtleiter, z.B. über ein Glasfaserkabel 12, zugeführt werden. Das Glasfaserkabel 12 besitzt eine definierte Länge und kann gegebenenfalls durch eine optische Abschwächeinrichtung 13 ergänzt werden. Der auf diese Weise gewonnene Startimpuls löst die Messung der zeitlichen Position von Echoimpuls und Startimpuls aus, aus der schließlich die Entfernung ermittelt wird.

Gemäß der Erfindung wird die Definition der zeitlichen Lage der Impulse in Genauigkeit und Auflösung entscheidend verbessert, indem aus dem digitalisierten elektrischen Signal ausgewählte Abtastwerte genommen werden und in zuvor gewonnene, für die Laufzeitmessung relevante Geräteeigenschaften enthaltende Signaturflächen eingepaßt werden.

Bei der Erfassung dieser Geräteeigenschaften werden dem Empfangskanal optische Impulse verschiedener Amplitude und konstanter Impulslaufzeit zugeleitet. Die optischen Impulse werden in der Photodiode 7 in elektrische Signale umgewandelt und im Verstärker 8 verstärkt. Durch eine zeitliche Mittelung kann dabei das Signal/Rausch-Verhältnis verbessert werden. Durch eine definierte sukzessive zeitliche Verschiebung der Laserimpulse in Bezug auf den Abtasttakt kann ferner eine effektive Abtastung der Empfangssignale mit einem Vielfachen der Taktfrequenz erzielt werden. Nach der Signaldetektion, insbesondere nach einer Diskriminierung gegenüber Rauschen, wird aus der Vielzahl der sich ergebenden elektrischen Impulse bzw. den entsprechenden Abtastwerten eine Signaturfläche ermittelt, in welche dann bei der Messung ausgewählte Abtastwerte der Impulse eingepaßt werden, wodamit die zeitliche Lage der Impulse mit hoher Genauigkeit ermittelt wird.

Für den Fall, daß Laser eingesetzt werden, für die es keine fixe, exakte zeitliche Beziehung zwischen dem elektrischen Ausgangsimpuls des Impulsgebers 2 und dem optischen Laserimpuls gibt, z.B. diodengepumpte Laser, kann die Bestimmung der zeitlichen Position der Echopulse beispielsweise durch eine Schwellwertdetektion erfolgen. Eine Überabtastung wird erzielt, indem mehrere Pulse gleicher Amplitude mit in Bezug auf den Abtastraster zufälliger zeitlicher Lage erfaßt werden. Eine Mittelung wie oben beschrieben kann in diesem Fall nicht erfolgen, aber es kann z.B. mit einer hohen zeitlich statistisch verteilten Überabtastung gearbeitet und anschließend, beispielsweise im Zuge der Berechnung der Signaturfläche, eine entsprechende Glättung vorgenommen werden.

Dem Entfernungsmesser 1 ist eine Auswerteeinrichtung 21 nachgeschaltet, die den über die Schnittstelle 10 ausgegebenen Datenstrom aufnimmt und im wesentlichen ein Rechenwerk (Signalprozessor) umfaßt. Die in der Zeichnung angegebenen Blöcke können sowohl mittels Hardware-Komponenten als auch softwaremäßig realisiert werden. Die Auswerteeinrichtung 21 weist einen ersten Modus für die Aufnahme der Signaturfläche und einen zweiten für die eigentliche Messung auf. Die Einstellung des jeweiligen Modus erfolgt mit dem Umschalter 22.

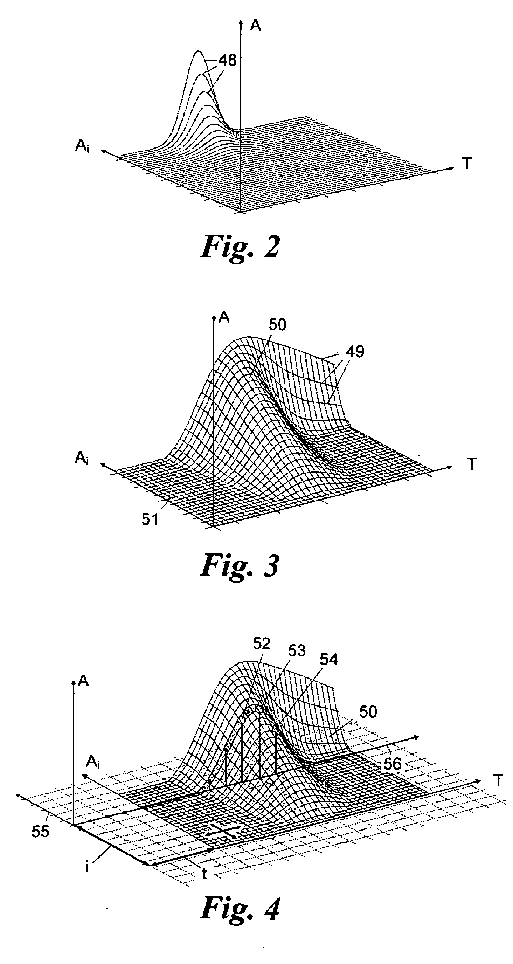

In Stufe 24 wird aus der Vielzahl der während des Aufnahmevorgangs gewonnenen Impulse eine Signaturfläche ermittelt, deren Einzelheiten anhand der Fig. 3, 4 und 8 noch näher erläutert werden. Im allgemeinen werden mehrere Signaturflächen bei verschiedenen Betriebstemperaturen (z.B. $T_1$ und $T_2$) der Vorrichtung ermittelt und in Teilspeichern 25 und 26 abgelegt. Für die eigentliche Messung des Impulsempfangszeitpunkts wird zunächst die aktuelle Betriebstemperatur gemessen und aus den in den Speichern 25 und 26 abgelegten Signaturflächen durch Interpolation und/oder Extrapolation eine der aktuellen Betriebstemperatur optimal angepaßte Signaturfläche berechnet (Block 27) und in einem Speicher 28 für die Verwendung bei der Messung bereitgestellt.

Zur Durchführung der Entfernungsmessung wird mit dem Schalter 22 auf Messung umgeschaltet. In einem ersten Schritt wird aus der Vielzahl der vom Analog/Digital-Wandler 9 pro abgegebenem Laserimpuls gelieferten Abtastwerte in Stufe 29 nach dort abgelegten Kriterien eine Auswahl von beispielsweise drei oder fünf Abtastwerten getroffen, deren mittlerer Wert z.B. jeweils die größte Amplitude aufweist. In Stufe 30 wird die im Speicher 28 bereitgestellte Signaturfläche an diese ausgewählten Abtastwerte angepaßt.

Auf diese Weise kann sowohl die zeitliche Position des Echoimpulses als auch jene des Startimpulses ermittelt werden. Durch Zählen der Takte des Taktgenerators 11 zwischen den zeitlichen Positionen von Start- und Echoimpuls in Stufe 31 wird die Impulslaufzeit zunächst grob ermittelt, während parallel hierzu in Stufe 32 die jeweilige zeitliche Position der Signaturfläche in Bezug auf den Taktraster sowohl für den Start- als auch für den Echoimpuls bestimmt wird. Aus diesen Werten wird in Stufe 33 die Impulslaufzeit mit hoher Genauigkeit berechnet. Aus der auf diese Weise gewonnenen Impulslaufzeit wird in 34 die Entfernung zwischen Entfernungsmesser und Ziel ermittelt.

In der Stufe 32 kann auch die Amplitude des Echoimpulses aus der Signaturfläche abgeleitet werden. In Verbindung mit der Impulslaufzeit kann aus diesem Wert auf die Reflektivität des Zieles und damit auf bestimmte Eigenschaften desselben rückgeschlossen werden.

In Fig. 2 ist eine Schar von optischen Impulsen ("Referenzimpulsen") 48 gezeigt. Die dargestellte optische Signalstärke (Amplitude) A entspricht dem gesamten Aussteuerbereich der Kombination aus Photodiode 7, Verstärker 8 und Analog/Digital-Wandler 9.

Fig. 3 veranschaulicht die für die optischen Impulse 48 am Ausgang des Verstärkers 8 erhaltenen elektrischen Impulse ("Empfangssignale") 49. Durch die Umwandlung der optischen Impulse 48 in der Photodiode 7 und durch die nicht-lineare Verstärkung im Verstärker 8 ist die Dynamik der elektrischen Impulse 49 gegenüber jener der optischen Impulse 48 deutlich reduziert. Es kommt durch die nicht-lineare Verstärkung und Sättigungseffekte auch zu erheblichen Veränderungen der Impulsform.

Die einzelnen Impulse bzw. die Abtastwerte derselben stehen in einer festen Phasenbeziehung zum Abtast- und Amplitudenraster 51, dessen Zeitmaßstab T durch den Taktgenerator 11 definiert wird. Die Abtastwerte sind im allgemeinen in Richtung des Amplitudenindex $A_i$ zunächst noch unregelmäßig verteilt. Aus der Vielzahl der Abtastwerte wird durch einen Anpassungsvorgang nun eine Signaturfläche 50 berechnet, deren Stützwerte gleichmäßig entsprechend dem Raster 51 verteilt sind. Die Signaturfläche 50 enthält in kompakter Form Informationen bezüglich der Impulsformen des elektrischen Echosignals über den gesamten nutzbaren Dynamikbereich des Empfangskanals.

Die Werte der Signaturfläche 50 zwischen den Stützstellen werden durch Interpolation ermittelt. Die Modellierung der Signaturfläche kann mittels eines Dreiecknetzes erfolgen, die genannte Anpassung kann hierbei auf ein lineares Gleichungssystem zurückgeführt werden. Mit Hilfe dieser Signaturfläche kann, wie an Hand der Fig. 4 nun erläutert wird, die zeitliche Position (Empfangszeitpunkt) eines empfangenen optischen Impulses (Echoimpuls oder Startimpuls) und dessen Signalstärke (Amplitude) mit hoher Genauigkeit und geringem Rechenaufwand bestimmt werden.

In Fig. 4 ist gezeigt, wie zum Messen des Empfangszeitpunktes eines Impulses ausgewählte Abtastwerte desselben in die Signaturfläche 50 "eingepaßt" werden. Aus den Abtastwerten eines elektrischen Impulses wurden gemäß den oben beschriebenen Methoden beispielsweise drei Abtastwerte 52, 53 und 54 ausgewählt. Durch Verschiebung der Signaturfläche 50 in beiden Achsrichtungen (T, $A_i$) wird diese an die Abtastwerte 52, 53, 54 so angepaßt, daß die Abweichungen zwischen den Abtastwerten 52, 53, 54 und der Signaturfläche 50 ein Minimum annehmen (Minimum der Summe der Quadrate der Abweichungen). An diesem Minimum ergibt sich aus der relativen Lage der Signaturfläche 50 zu den Bezugslinien 55 und 56 der Abtastwerte 52, 53, 54 die exakte zeitliche Position t des Echoimpulses als Verschiebung in Richtung des Zeitmaßstabs T (Abtastrasters 56). Aus der Verschiebung i der Signaturfläche 51 in Richtung der Amplitudenindexachse 55 kann die Amplitude A des optischen Echoimpulses ermittelt werden.

Zur Ermittlung erster Näherungswerte für die Einpassung können zusätzliche Hilfsflächen herangezogen werden, die aus der Signaturfläche 50 abgeleitet sind.

Die beschriebene Einpassung erfolgt sowohl für den Startimpuls als auch für jeden einzelnen zu einem ausgesendeten Sendeimpuls detektierten Echoimpuls. Die Bestimmung der Zielentfernung kann nun auf zweierlei Art erfolgen. Einerseits ergibt sich die Entfernung zum Ziel aus dem Laufzeitunterschied des zum aktuellen Laserimpuls gehörenden Startimpulses 36 und dem jeweiligen Echoimpuls. Durch Bilden der Differenz der jeweils ermittelten Laufzeiten von Echoimpuls und Startimpuls werden etwaige Schwankungen der zeitlichen Lage des Laserpulses gegenüber dem Triggerpuls eliminiert. Unsicherheiten der Einpassung, hervorgerufen durch Amplitudenrauschen der Abtastwerte, addieren sich jedoch quadratisch, was unter der Annahme von gleichen Verhältnissen für Startimpuls und Echoimpuls zu einer Erhöhung des Rauschens der Entfernungsmessung um den Faktor 1,4 führt. Andererseits kann, wenn die zeitliche Lage des Laserimpulses gegenüber dem den Laserimpuls auslösenden Triggerimpuls des Taktgenerators hinreichend konstant ist, die Position des Startpulses durch Mittelung mit hoher Genauigkeit bestimmt werden. In diesem Fall kann eine Messung mit reduziertem Rauschen durch Bezug der zeitlichen Lage des Echoimpulses auf die gemittelte Position des Startimpulses erreicht werden.

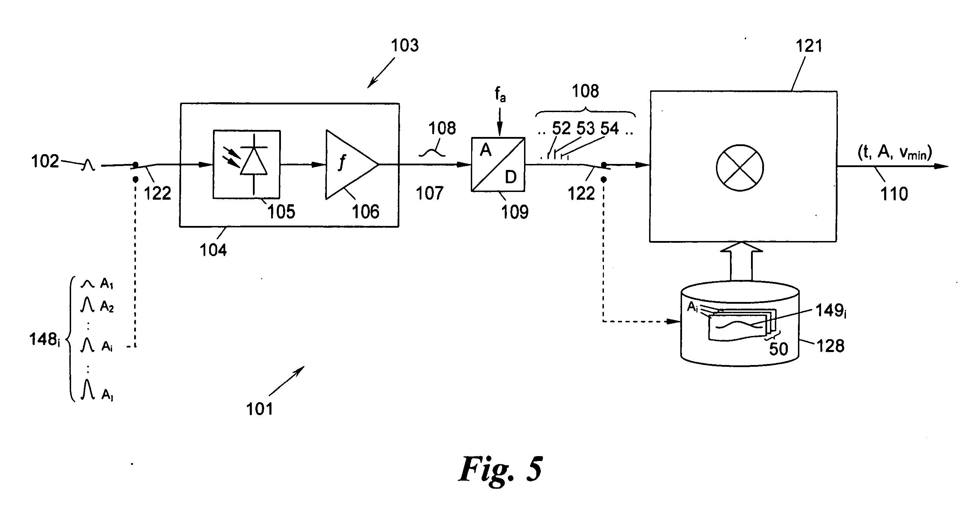

Fig. 5 zeigt eine verallgemeinerte Ausführungsform einer Vorrichtung 101 zum Messen des Empfangszeitpunkts t eines Impulses 102, der in einem Empfangssystem 103 mit einem einzigen Empfangskanal 104 empfangen wird. Das Empfangssystem 103 ist im gezeigten Beispiel ein opto-elektronisches Empfangssystem, der Impuls 102 demgemäß ein optischer Impuls, z.B. ein Laserimpuls, und der Empfangskanal 104 umfaßt eine Photodiode 105.

Es versteht sich, daß das Empfangssystem 103 auch von beliebig anderer als der dargestellten opto-elektronischen Art sein kann, beispielsweise ein Funkempfangssystem für Funk- oder Radar-Impulse, ein akustisches Empfangssystem für akustische Impulse oder Echos, ein Empfangskreis in einem elektronischen System zur Verarbeitung von elektronischen Impulsen, usw.

Der Empfangskanal 104 ist bevorzugt aus analogen Komponenten aufgebaut, um eine möglichst hohe Bandbreite zu erzielen, wie dem Fachmann bekannt. Zur Verarbeitung von Impulsen 102 mit hohem Dynamikumfang besitzt der Empfangskanal 104 ferner bevorzugt ein dynamikkomprimierendes Übertragungsverhalten, hier versinnbildlicht durch einen die Amplitudendynamik des Impulses 102 komprimierenden Verstärker 106. Dadurch tritt am Ausgang 107 des Empfangskanals 104 ein Empfangssignal 108 auf, welches eine dynamikkomprimierte und damit in ihrer Amplitudenform verzerrte Version des Eingangs-Impulses 102 enthält. Allgemein gesprochen kann das Empfangssystem 104 ein beliebiges nicht-lineares Übertragungsverhalten haben.

Das Empfangssignal 108 wird in einem Analog/DigitalWandler 109 mit einer Abtastrate $f_a$ von z.B. 500 MSamples/s abgetastet und digitalisiert, z.B. mit einer Bitbreite von 8, 12 oder 16 Bit. Das digitalisierte Empfangssignal 108 besteht aus den obengenannten einzelnen Abtastwerten 52, 53, 54 usw.; seine Abtastwerte werden in ihrer Gesamtheit einfachheithalber weiterhin als Empfangssignal 108 bezeichnet.

Das Empfangssignal 108 wird einer Auswerteeinrichtung 121 zugeführt. Die Auswerteeinrichtung 121 vergleicht das Empfangssignal 108 mit in einem Speicher 128 gespeicherten Referenzsignalen $149_i$, um daraus letztlich den Empfangszeitpunkt t und die Amplitude A des Impulses 102 zu ermitteln und gemeinsam mit einem Qualitätsmaß $v_{min}$ über die Zuverlässigkeit der Meßwerte t, A auf einem Ausgang 110 auszugeben. Bei diesem Vergleich führt die Auswerteeinrichtung 121 die bereits kurz anhand von Fig. 4 erörterte Einpassung des Empfangssignals 108 in eine von den Referenzsignalen $149_i$ aufgespannte Signaturfläche 50 durch, wie später noch ausführlicher erörtert wird.

Zunächst wird auf die Erzeugung der Referenzsignale $149_i$ näher eingegangen. Die Referenzsignale $149_i$ sind das Ergebnis eines Trainings- bzw. Kalibrierdurchlaufs von Referenzimpulsen $148_i$ vorgegebener unterschiedlicher Amplitude, beispielsweise den optischen Impulsen 48 von Fig. 2, durch die Vorrichtung 101.

Für den Trainingsdurchlauf wird die Vorrichtung 101 über die symbolisch dargestellten Schalter 122 in den mit strichlierten Linien gezeichneten Trainingsmodus versetzt. In diesem Modus werden die Empfangssignale 108 von I verschiedenen Referenzimpulsen $148_i$ (i = 1..I) mit jeweils gleicher Impulsform, jedoch unterschiedlicher Amplitude $A_i$ jeweils als ein Referenzsignal $149_i$ für eine bestimmte Amplitude $A_i$ im Speicher 128 hinterlegt, und zwar bezogen auf einen gemeinsamen Zeitmaßstab T. Letzteres ist einfach zu bewerkstelligen, weil im Trainingsmodus der Empfangszeitpunkt des Empfangssignals 108 eines Referenzimpulses $148_i$ bekannt ist.

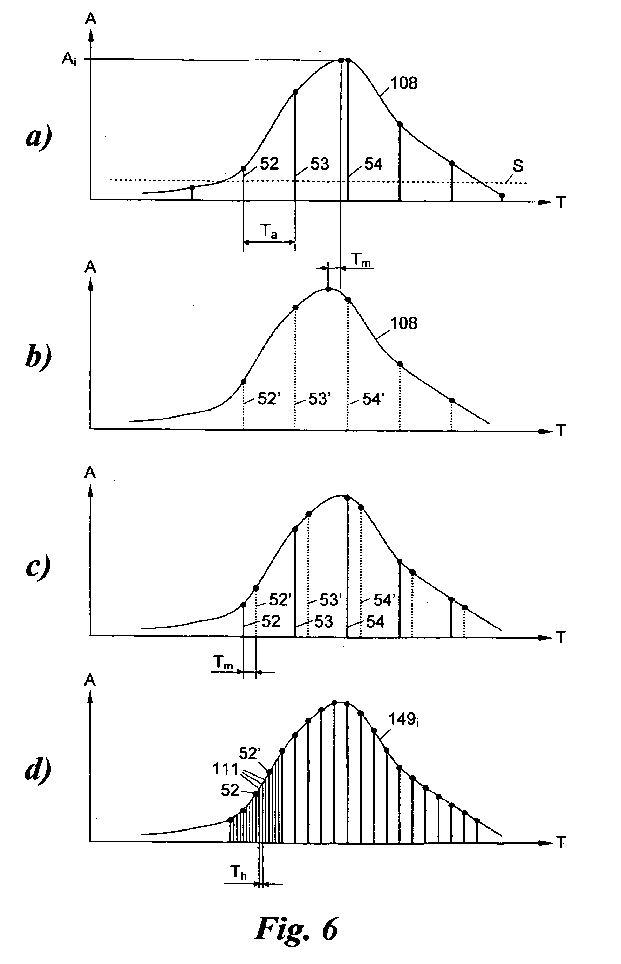

Besonders hervorzuheben ist, daß der Einpaßvorgang der Abtastwerte 52, 53, 54 in die Signaturfläche 50, d.h. der Vergleich des Empfangssignales 108 eines Impulses 102 mit den Referenzsignalen $149_i$, mit einer höheren Zeitauflösung als der Abtastrate $f_a$ durchgeführt werden kann, und zwar indem die Referenzsignale $149_i$ in einer höheren Zeitauflösung des Zeitmaßstabs T im Speicher 128 hinterlegt werden und der Einpaßvorgang in den Auflösungsschritten dieser höheren Zeitauflösung durchgeführt wird. Solche hochaufgelösten Referenzsignale $149_i$ können dennoch mit derselben Vorrichtung 101 gewonnen werden, wie anhand von Fig. 6 kurz erläutert wird.

Fig. 6a zeigt das Empfangssignal 108 eines Referenzimpulses $148_i$ mit vorgegebener Amplitude $A_i$. Das Empfangssignal 108 wird mit einer relativ "geringen" Abtastrate $f_a$ von z.B. 500 MSamples/s abgetastet, um die Abtastwerte 52, 53, 54,... zu erhalten. Diese Abtastrate entspricht einer zeitlichen Auflösung $T_a = 1/f_a$ von 2 ns, was z.B. bei optischen Lichtimpulsen einer Entfernungsauflösung von 60 cm entspricht.

Für die Generierung der Referenzsignale $149_i$ werden bevorzugt nur solche Abtastwerte 52, 53, 54... berücksichtigt, welche einen Amplitudenschwellwert S überschreiten.

Fig. 6b zeigt das Empfangssignal 108 eines

gleichartigen Referenzimpulses 148$_i$ derselben Amplitude A$_i$, der jedoch um einen vorgegebenen, kleinen Zeitversatz T$_m$ phasenverschoben empfangen wurde. Der Zeitversatz T$_m$ kann beispielsweise durch zeitversetzte Aussendung der Impulse im Sendesystem erreicht werden, z.B. bei der Vorrichtung von Fig. 1 durch Zeitversetzen der Triggerimpulse des Impulsgebers 2, oder auch durch Verändern des Übertragungsweges der Referenzimpulse, z.B. bei optisch reflektierten Impulsen durch Verstellen der Entfernung des Reflexionsziels.

Eine Abtastung des um T$_m$ zeitversetzten Empfangssignals 108 mit derselben Abtastrate f$_a$ erzeugt daher weitere Abtastwerte 52', 53', 54' ... zu um T$_m$ versetzten Zeitpunkten (Fig. 6c). Durch Fortschreitendes weiteres Zeitversetzen des Referenzimpulses 148$_i$ um T$_m$, bis letztlich der gesamte Zeitbereich T$_a$ - T$_m$ abgedeckt ist, können anschließend alle erhaltenen Abtastwerte 52, 52'... "kämmend", d.h. abwechselnd aufeinanderfolgend, zu einem mit der hohen Zeitauflösung T$_m$ abgetasteten Referenzsignal 149$_i$ zusammengesetzt werden, siehe Fig. 6d. In dem gezeigten Beispiel ist T$_m$ = T$_a$/4 = 500 ps.

Fig. 6d zeigt den optionalen weiteren Schritt des Einfügens von Interpolationswerten 111 zwischen die Abtastwerte 52, 52'... des Referenzsignals 149$_i$, um eine im Prinzip beliebig feine, lediglich durch Speicher- und Rechenleistung begrenzte besonders hohe Zeitauflösung T$_h$ zu erreichen. Beispielsweise werden jeweils 249 Interpolationswerte 111 zwischen zwei Abtastwerte 52, 52'... eingefügt, so daß die Zeitauflösung T$_h$ = T$_m$/250 = 2 ps beträgt, was einer Abtastrate f$_n$ von 500 GSamples/s entspricht.

Daraus ist ersichtlich, daß bei dem Einpaßvorgang eines Empfangssignales 108 mit niedrig-zeitaufgelösten Abtastwerten 52, 53,... in eine von Referenzsignalen 149$_i$ aufgespannte Signaturfläche 50 dennoch ein sehr feinstufiger Vergleich in Richtung des Zeitmaßstabs T in den Auflösungsschritten T$_m$ oder T$_h$ der hochaufgelösten Referenzsignale 149$_i$ vorgenommen werden kann, im gezeigten Beispiel mit einer Zeitauflösung von bis zu 2 ps. Dies entspricht z.B. bei Lichtimpulsen einer Entfernungsauflösung von 0,6 mm bzw. bei einem Reflexions-Laser-Entfernungsmesser bzw. -Scanner einer Genauigkeit von 0,6 mm / 2 = 0,3 mm.

Wie zuvor bereits erwähnt, können zwischen die einzelnen real erhaltenen Referenzsignale 149$_i$ einer Referenzsignal-Schar bzw. Signaturfläche 50 auch noch weitere durch Interpretation erhaltene Referenzsignale 149$_i$ eingefügt werden, so daß die Auflosung einer Signaturfläche 50 auch in Richtung ihres Amplitudenindex A$_i$ - über die Anzahl I der ursprünglich verwendeten Referenzimpulse 148$_i$ hinaus - noch wesentlich erhöht werden kann. Die Treffsicherheit der Einpassung eines Empfangssignals 108 in die Signaturfläche 50 und damit die Genauigkeit der Messung können dadurch noch weiter erhöht werden.

Eine nochmalige signifikante Steigerung der Treffsicherheit und damit Genauigkeit der Empfangszeitpunktsbestimmung wird mit Hilfe der nun folgend beschriebenen mehrkanaligen Vorrichtungen und Verfahren erreicht.

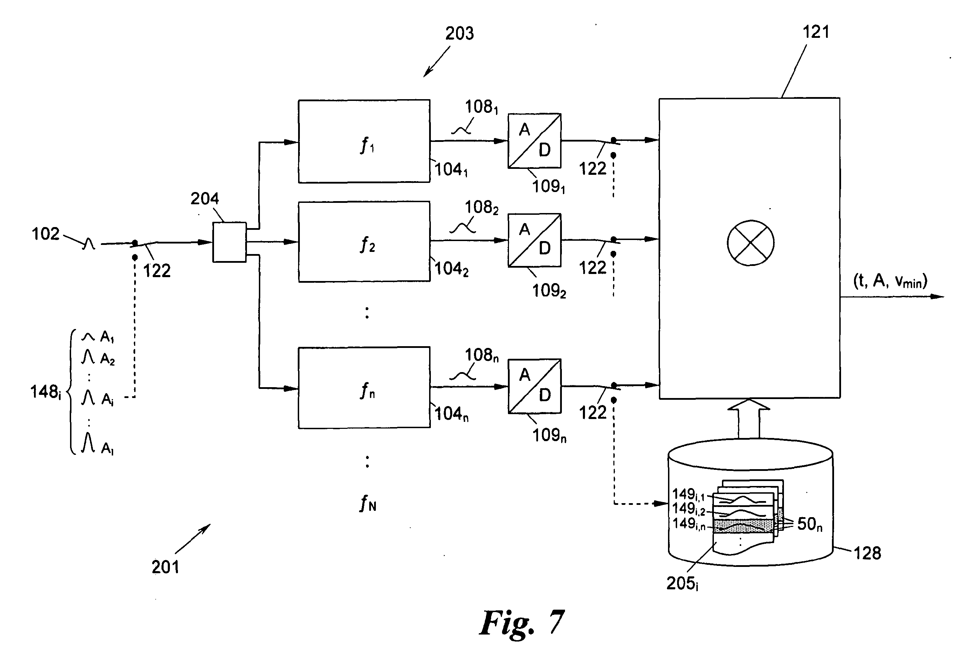

Fig. 7 zeigt eine solche weitere Ausführungsform 201 einer erfindungsgemäßen Vorrichtung mit einem mehrkanaligen Empfangssystem 203 zur Verarbeitung von Impulsen 102 von hohem Dynamikumfang.

Das Empfangssystem 203 umfaßt N parallelgeschaltete Empfangskanäle 104$_n$ (n = 1..N), denen ein Impuls 102 über einen Signalteiler 204 zeitgleich zugeführt wird. Die am Ausgang der Empfangskanäle 104$_n$ erhaltenen Empfangssignale 108$_n$ werden über Analog-Digitalwandler 109$_n$ der Auswerteeinrichtung 121 zugeführt.

Die Empfangskanäle 104$_n$ besitzen jeweils eine unterschiedliche Empfindlichkeit und/oder ein unterschiedliches nicht-lineares Übertragungsverhalten, sodaß die Empfangssignale 108$_n$ auch jeweils eine unterschiedliche Form haben. Der Satz von Empfangssignalen 108$_n$, der für einen Impuls 102 über das Empfangssystem 203 erhalten wird, ist daher charakteristisch für diesen Impuls.

Demgemäß können in dem Trainingsmodus (strichlierte Stellung der symbolischen Schalter 122) für jeden Referenzimpuls 148$_i$ mit einer vorgegebenen Amplitude A$_i$ auch jeweils N Empfangssignale 108$_n$ empfangen und als Satz 205$_i$ von N Referenzsignalen 149$_{i,n}$ im Speicher 128 hinterlegt werden. Analog zu Fig. 4 spannen alle I Referenzsignale 149$_{i,n}$ eines Empfangskanals 104$_n$ jeweils eine der N Signaturflächen 50$_n$ auf.

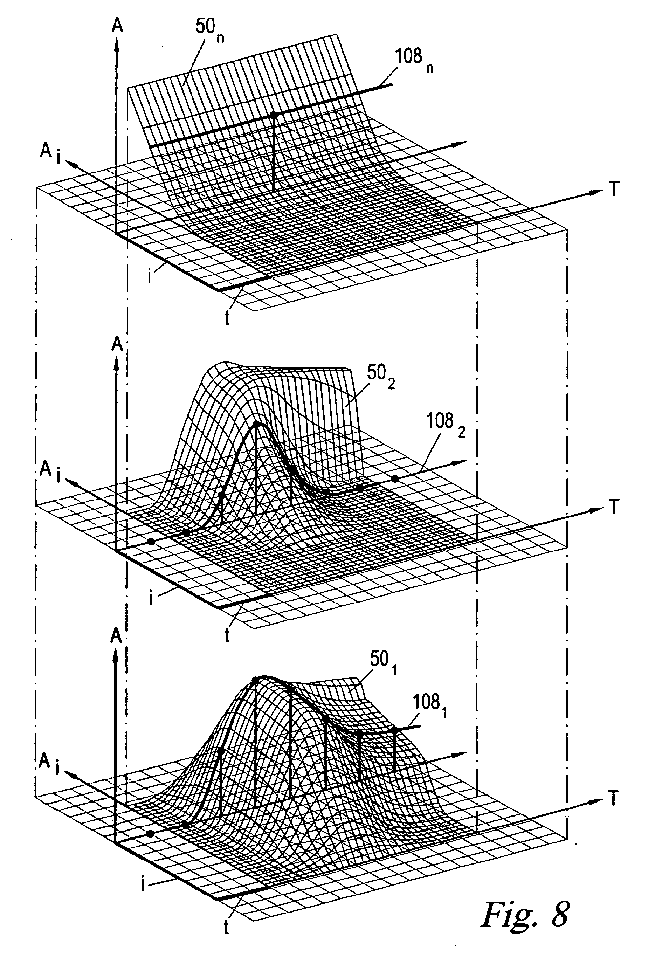

In Fig. 8 ist dargestellt, wie ein Satz von Empfangssignalen 108$_n$ eines Impulses 102 gleichzeitig in alle N Signaturflächen 50$_n$ durch gemeinsame Verschiebung in Amplitudenindexrichtung A$_i$ und Zeitmaßstabsrichtung T eingepaßt wird. Mit anderen Worten wird der Satz von Empfangssignalen 108$_n$ mit jedem der I Referenzsätze 205$_i$ verglichen, u.zw. jeweils ein Empfangssignal 108$_n$ mit einem Referenzsignal 149$_{i,n}$, und so jener Index i und jener Zeitversatz t ermittelt, bei denen die Vergleichsabweichung minimal ist.

Als Maß für die Vergleichsabweichung wird bevorzugt die Summe der quadratischen Abweichung jeweils zwischen einem Empfangssignal 108$_n$ und einem Referenzsignal 149$_{i,n}$, summiert über alle N Empfangskanäle, herangezogen:

$$v_{i,t} = \sum_{n,k} (s_{k,n} - r_{k-t,i,n})^2$$

mit

$v_{i,t}$  Vergleichsabweichung beim Zeitversatz t und Referenz- satz- bzw. Amplitudenindex-Versatz i zwischen Empfangs- signal 108$_n$ und Referenzsignal 149$_{i,n}$;

$s_{k,n}$  Abtastwert des Empfangssignals 108$_n$ zum

Zeitpunkt k;

$r_{k-t,i,n}$    Abtastwert des Referenzsignals $149_{i,n}$ zum Zeitpunkt k-t.

Durch Aufsuchen des Minimums von $v_{i,t}$ kann nun der Empfangszeitpunkt t und in der Folge auch die zugehörige Amplitude $A_i$ des Impulses 102 ermittelt werden.

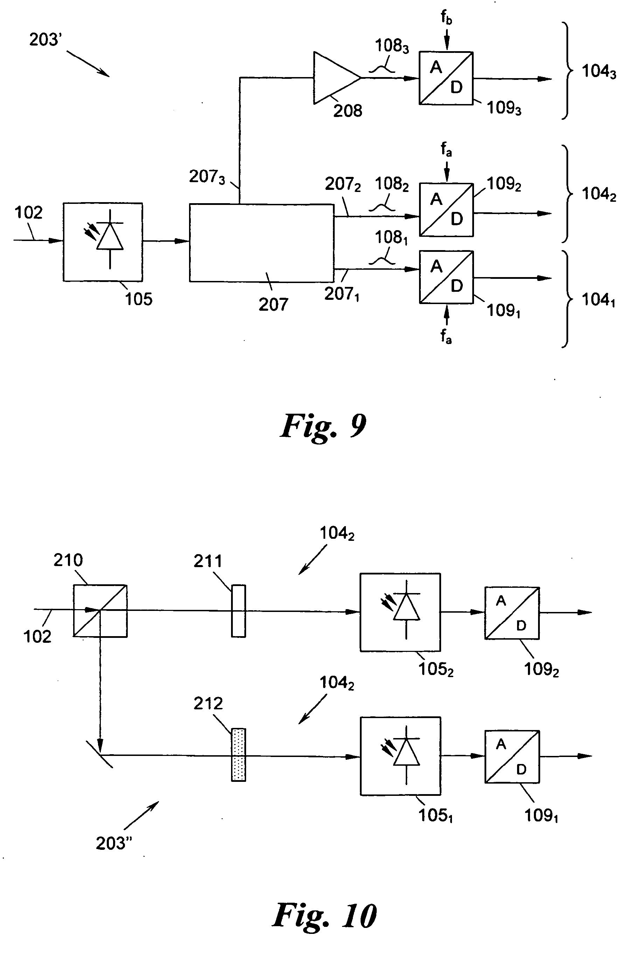

Fig. 8 zeigt in dem obersten dargestellten Kanal n ein Empfangssignal $108_n$, welches für die analysierte Dauer des Impulses 102 hier eine weitgehend konstante Amplitude hat, wie es z.B. aus einem stark integrierenden Empfangskanal $104_n$ und/oder mit einer gegenüber $f_a$ reduzierten Abtastrate $f_b$ erhalten wird. Fig. 9 zeigt ein Beispiel eines Empfangssystems 203', das zwei unterschiedlich dynamikkomprimierende Empfangskanäle $104_1$, $104_2$ und einen solchen integrierenden, "langsamen" Empfangskanal $104_3$ hat. Eine Photodiode 105 empfängt den optischen Impuls 102. Der Ausgang der Photodiode 105 ist auf einen Verstärker 207 mit zwei Ausgängen $207_1$, $207_2$ geführt, welche Empfangssignale $108_1$ und $108_2$ mit unterschiedlicher Dynamikkompression liefern.

An einem Abgriff $207_3$ des Verstärkers 207 stellt dieser ein Signal zur Verfügung, welches einen seiner aktuellen Betriebszustände anzeigt, z.B. seine aktuelle Ladungs- oder Stromaufnahme, seine Betriebstemperatur usw., und welches Signal einem Anpaßverstärker 208 zugeführt wird. Das Signal auf dem Abgriff $207_3$ kann somit einerseits als ein "weiteres Empfangssignal" $108_3$ betrachtet werden, da es ebenfalls auf den Impuls 102 zurückzuführen ist; andererseits ist es aber auch ein Signal über den Betriebszustand des Empfangssystems 203' selbst.

Das weitere Empfangssignal $108_3$ hat im gezeigten Beispiel ein relativ langsames Zeitverhalten, sodaß es kostengünstig mit einem Analog/Digital-Wandler $109_3$ mit besonders geringer Abtastrate $f_b$ digitalisiert werden kann.

Alternativ könnten auch noch weitere Betriebszustände der geschilderten Empfangssysteme 103, 203, 203' als weitere Empfangssignale $108_3$ ermittelt und wie die anderen "normalen" Empfangssignale $108_n$ in die Signaturflächenanpassung einbezogen werden.

Bei den bisher gezeigten Ausführungsformen von mehrkanaligen Empfangssystemen erfolgte die Aufteilung des Impulses 102 auf die verschiedenen Empfangskanäle $104_n$ auf elektrischem Wege. Alternativ ist es in opto-elektrischen Systemen wie Laser-Entfernungsmessern oder -Scannern auch möglich, den Impuls 102 auf optischem Wege auf die Empfangskanäle aufzuteilen, beispielsweise mit Hilfe eines optischen Strahlteilerwürfels 210 in einem opto-elektrischen Empfangssystem 203", wie in Fig. 10 gezeigt. Eine unterschiedliche Empfindlichkeit und/oder NichtLinearität der Empfangskanäle $104_n$ kann dabei auch durch optische Komponenten erreicht werden, z.B. durch Einfügen von unterschiedlich abschwächenden optischen Filtern 211, 212 in den Strahlengang.

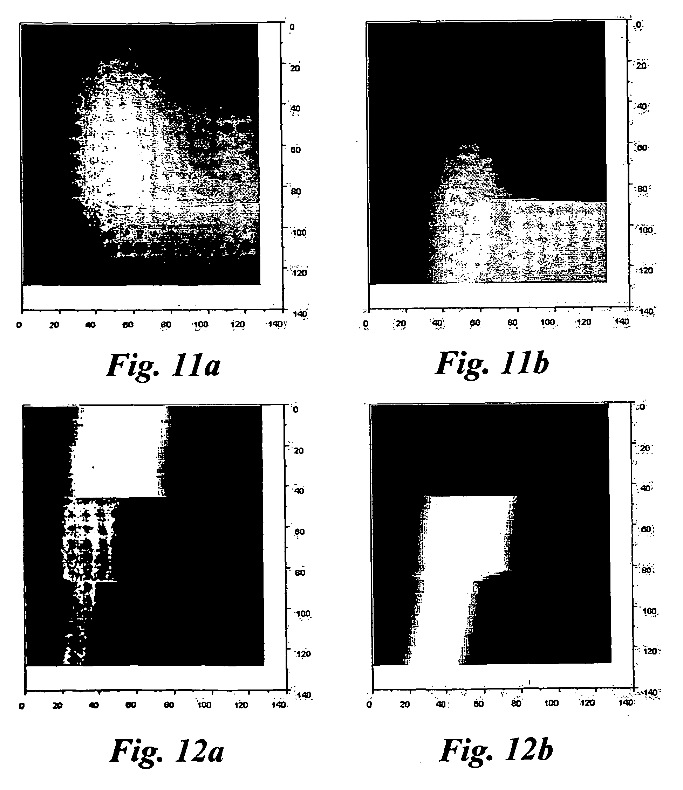

Die Fig. 11 und 12 zeigen die Verwendung von Gewichtungswerten bei der Bestimmung der Vergleichsabweichung $v_{i,t}$ in den Vergleichsschritten der Fig. 4 und 8. Die Fig. 11a und 11b sind Draufsichten auf die Signaturflächen $50_1$ und $50_2$ des ersten und zweiten Kanals von Fig. 8, wobei die Helligkeit der Graustufendarstellung den Amplitudenwert der Signaturfläche angibt.

Die Fig. 12a und 12b zeigen - in derselben Darstellungsart - "Gewichtungsflächen" aus Gewichtungsfaktoren g, die den einzelnen Werten der Signaturflächen $50_1$, $50_2$ der Fig. 11a und 11b zugewiesen und für die Bestimmung einer gewichteten Vergleichsabweichung $v'_{i,t}$ gemäß

$$v'_{i,t} = \sum_{n,k} g(s_{k,n} - v_{k-t,i,n})^2$$

herangezogen werden können.

In den Fig. 12a und 12b zeigen helle Werte höhere Gewichtungsfaktoren g an als dunkle Werte; Schwarz zeigt z.B. einen Gewichtungsfaktor g von Null, Weiß einen Gewichtungsfaktor g von 1 und Grau einen Gewichtsfaktor g von 0,5 an. Auf diese Weise können bestimmte Bereiche der Signaturflächen $50_n$ z.B. zur Rechenzeitverkürzung ausgeblendet (g = 0) oder ihnen eine besondere Signifikanz (g = 1) zugewiesen werden.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1.    Vorrichtung (101, 201) zum Messen des Empfangszeitpunkts (t) eines Impulses (102) in einem Empfangssystem (6 - 8, 103, 203, 203', 203"), das zumindest einen Empfangskanal (6 - 8, 104, $104_n$) mit nicht-linearem Übertragungsverhalten enthält, welcher an seinem Ausgang (10, 107, $207_n$) ein Empfangssignal (108, $108_n$) liefert, **gekennzeichnet durch**

einen Speicher (28, 128), in dem die Empfangssignale von Referenzimpulsen ($148_i$) vorgegebener unterschiedlicher Amplitude ($A_i$) als Referenzsignale (149_i, $149_{i,n}$) bezogen auf einen Zeitmaßstab (T) vorliegen, und

eine an das Empfangssystem und den Speicher angeschlossene Auswerteeinrichtung (21, 121), welche ein Empfangssignal (108, $108_n$) mit jedem Referenzsignal (149_i, $149_{i,n}$) unter variierendem Zeitversatz (t) vergleicht, um jenes Referenzsignal ($148_i$) und jenen Zeitversatz (t) zu ermitteln, bei denen die Vergleichsabweichung ($v_{i,t}$, $v'_{i,t}$) minimal ist, und diesen Zeitversatz als Empfangszeitpunkt (t) bezüglich des Zeitmaßstabs (T) ausgibt.

2. Vorrichtung (201) nach Anspruch 1 zum Messen des Empfangszeitpunkts (t) eines Impulses (102) von hohem Dynamikumfang in einem Empfangssystem (203, 203', 203"), das zumindest zwei parallele Empfangskanäle ($104_n$) mit unterschiedlicher Empfindlichkeit enthält, welche an ihren Ausgängen ($207_n$) einen Satz zeitparalleler Empfangssignale ($108_n$) liefern, **gekennzeichnet dadurch, dass**
in dem Speicher (128), die Sätze von Empfangssignalen von Referenzimpulsen ($148_i$) vorgegebener unterschiedlicher Amplitude ($A_i$) als Referenzsätze ($205_i$) bezogen auf einen Zeitmaßstab (T) vorliegen, und
die an das Empfangssystem (203, 203', 203") und den Speicher (128) angeschlossene Auswerteeinrichtung (121) einen Satz von Empfangssignalen ($108_n$) mit jedem Referenzsatz ($205_i$) unter variierendem Zeitversatz (t) vergleicht, um jenen Referenzsatz ($205_i$) und Zeitversatz (t) zu ermitteln, bei denen die Vergleichsabweichung ($v_{i,t}$, $v'_{i,t}$) minimal ist, und diesen Zeitversatz als Empfangszeitpunkt (t) bezüglich des Zeitmaßstabs (T) ausgibt.

3. Vorrichtung nach Anspruch 1 oder 2, **dadurch gekennzeichnet, daß** der bzw. die Empfangskanäle (6 - 8, 104, $104_n$) analoger Art und der Speicher (28, 128) und die Auswerteeinrichtung (21, 121) digitaler Art sind, wobei am Ausgang jedes Empfangskanals (6 - 8, 104, $104_n$) ein Analog/Digital-Wandler (9, 109, $109_n$) liegt.

4. Vorrichtung nach Anspruch 3, **dadurch gekennzeichnet, daß** die Referenzsignale ($149_i$) bzw. Referenzsätze ($205_i$) in dem Speicher (28, 128) in einer hohen ersten Zeitauflösung ($T_m$, $T_h$) vorliegen,
daß das bzw. die Empfangssignale (108, $108_n$) eines Impulses (102) mit einer geringen zweiten Zeitauflösung ($T_a$) abgetastet sind, und
daß die Auswerteeinrichtung (21, 121) den Zeitversatz (t) in den Auflösungsschritten ($T_m$, $T_h$) der hohen ersten Zeitauflösung ($T_m$, $T_h$) variiert.

5. Vorrichtung nach einem der Ansprüche 1 bis 4 zum zusätzlichen Messen der Amplitude (A) des Impulses (102), **dadurch gekennzeichnet, daß** der Speicher (28, 128) zu jedem Referenzsignal ($149_i$) bzw. Referenzsatz ($205_i$) auch die Amplitude ($A_i$) des zugehörigen Referenzimpulses ($148_i$) enthält und die Auswerteeinrichtung (21, 121) die Amplitude ($A_i$) jenes Referenzimpulses ($148_i$), welcher zum ermittelten Referenzsignal ($149_i$) bzw. Referenzsatz ($205_i$) gehört, als Amplitude (A) des Impulses (102) ausgibt.

6. Vorrichtung nach einem der Ansprüche 1 bis 5, **dadurch gekennzeichnet, daß** die Auswerteeinrichtung (21, 121) für einen gemessenen Empfangszeitpunkt (t) auch die zugehörige Vergleichsabweichung ($v_{i,t}$, $v'_{i,t}$) als Qualitätsmaß der Messung ausgibt.

7. Vorrichtung nach einem der Ansprüche 1 bis 6, **dadurch gekennzeichnet, daß** sie zumindest einen Sensor (206, 208) enthält, welcher einen Betriebszustand eines oder mehrerer Empfangskanäle ($104_3$) mißt und an seinem Ausgang ($207_3$) gleichsam als weiteres Empfangssignal ($108_3$) bereitstellt,
daß der Speicher (128) solch weitere Empfangssignale ($108_3$) der Referenzimpulse ($148_i$) als weitere Referenzsignale ($149i$, $149_{i,n}$) enthält, und
daß die Auswerteeinrichtung (21, 121) bei dem genannten Vergleich auch ein solch weiteres Empfangssignal ($108_3$) mit den weiteren Referenzsignalen ($149_i$, $149_{i,n}$) vergleicht und in die Ermittlung der Vergleichsabweichung ($v_{i,t}$, $v'_{i,t}$) einbezieht.

8. Vorrichtung nach einem der Ansprüche 1 bis 7, **dadurch gekennzeichnet, daß** sie zumindest einen Sensor enthält, welcher die Betriebstemperatur eines oder mehrerer Empfangskanäle (6 - 8, 104, $104_n$) mißt,
daß der Speicher (25-28, 128) Referenzsignale ($205_i$) bzw. Referenzsätze für verschiedene Betriebstemperaturen ($T_1$, $T_2$) enthält, und
daß die Auswerteeinrichtung daraus die für die jeweils aktuelle Betriebstemperatur gültigen Referenzsignale ($149_i$) bzw. Referenzsätze ($205_i$) ermittelt, erforderlichenfalls durch Inter- oder Extrapolation, und bei dem genannten Vergleich verwendet.

9. Vorrichtung nach einem der Ansprüche 1 bis 8, **dadurch gekennzeichnet, daß** der Speicher (28, 128) ferner Gewichtungswerte (g) für die Referenzsignale ($149_i$) bzw. Referenzsätze ($205_i$) enthält, welche in die Ermittlung der minimalen Vergleichsabweichung ($v_{i,t}$, $v'_{i,t}$) mittels eines Least-Squares-Verfahrens Eingang finden.

10. Verfahren zum Messen des Empfangszeitpunkts (t) eines Impulses (102) in einem Empfangssystem (6 - 8, 103, 203, 203', 203"), das zumindest einen Empfangskanal (6 - 8, 104, $104_n$) mit nicht-linearem Übertragungsverhalten enthält, welcher an seinem Ausgang (10, 107, $207_n$) ein Empfangssignal (108, $108_n$) liefert, **gekennzeichnet durch** die Schritte
Zurverfügungstellen gespeicherter Empfangssignale von Referenzimpulsen ($148_i$) vorgegebener unterschiedlicher Amplitude ($A_i$) als Referenzsignale ($149_i$, $149_{i,n}$) bezogen auf einen Zeitmaßstab (T),
Vergleichen eines Empfangssignals (108, $108_n$) mit jedem Referenzsignal ($149_i$, $149_{i,n}$) unter variierendem Zeitversatz (t), um jenes Referenzsignal ($148_i$) und jenen Zeitversatz (t) zu ermitteln, bei denen die Vergleichsabweichung ($v_{i,t}$, $v'_{i,t}$) minimal ist, und

Ausgeben dieses Zeitversatzes als Empfangszeitpunkt (t) bezüglich des Zeitmaßstabs (T).

11. Verfahren nach Anspruch 10 zum Messen des Empfangszeitpunkts (t) eines Impulses (102) von hohem Dynamikumfang in einem Empfangssystem (203, 203', 203"), das zumindest zwei parallele Empfangskanäle ($104_n$) mit unterschiedlicher Empfindlichkeit enthält, welche an ihren Ausgängen ($207_n$) einen Satz zeitparalleler Empfangssignale ($108_n$) liefern, **gekennzeichnet durch** die Schritte
Zurverfügungstellen gespeicherter Sätze von Empfangssignalen von Referenzimpulsen ($148_i$) vorgegebener unterschiedlicher Amplitude ($A_i$) als Referenzsätze ($205_i$) bezogen auf einen Zeitmaßstab (T), Vergleichen eines Satzes von Empfangssignalen ($108_n$) mit jedem Referenzsatz ($205_i$) unter variierendem Zeitversatz (t), um jenen Referenzsatz ($205_i$) und Zeitversatz (t) zu ermitteln, bei denen die Vergleichsabweichung ($v_{i,t}$, $v'_{i,t}$) minimal ist, und Ausgeben dieses Zeitversatzes als Empfangszeitpunkt (t) bezüglich des Zeitmaßstabs (T).

12. Verfahren nach Anspruch 10 oder 11, **dadurch gekennzeichnet,**
**daß** die Referenzsignale ($149_i$) bzw. Referenzsätze ($205_i$) in einer hohen ersten Zeitauflösung ($T_m$, $T_h$) zur Verfügung gestellt werden,
**daß** das bzw. die Empfangssignale (108, $108_n$) mit einer geringen zweiten Zeitauflösung ($T_a$) abgetastet werden, und
**daß** beim Vergleichen der Zeitversatz (t) in den Auflösungsschritten ($T_m$, $T_h$) der hohen ersten Zeitauflösung ($T_m$, $T_h$) variiert wird.

13. Verfahren nach Anspruch 12, **dadurch gekennzeichnet, daß** ein zur Verfügung gestelltes Referenzsignal ($149_i$, $149_{i,n}$) erzeugt wird, indem mehrere gleichartige und in den Auflösungsschritten einer hohen Zeitauflösung ($T_m$) zeitversetzte Referenzimpulse ($148_i$) verwendet werden, deren Empfangssignale (108) mit einer geringen Zeitauflösung ($T_a$) abgetastet und kämmend zum Referenzsignal ($149_i$) zusammengesetzt werden.

14. Verfahren nach Anspruch 13, **dadurch gekennzeichnet, daß** das zusammengesetzte Referenzsignal ($149_i$) durch Einfügen von Interpolationswerten (111) auf eine noch höhere Zeitauflösung ($T_h$) gebracht wird.

15. Verfahren nach einem der Ansprüche 12 bis 14, **dadurch gekennzeichnet, daß** die erste Zeitauflösung ($T_m$, $T_h$) in der Größenordnung von Pikosekunden und die zweite Zeitauflösung ($T_a$) in der Größenordnung von Nanosekunden liegt.

16. Verfahren nach einem der Ansprüche 10 bis 15 zum Messen der Laufzeit des Impulses (102) von einem Sendesystem (2-5) zum Empfangssystem (6 - 8, 103, 203, 203', 203"), **dadurch gekennzeichnet, daß** der Zeitmaßstab (T) auf den Absendezeitpunkt des Impulses (102) vom Sendesystem (2 - 5) bezogen wird, um aus dem Zeitversatz (t) die Laufzeit zu erhalten.

17. Verfahren nach einem der Ansprüche 10 bis 16 zum zusätzlichen Messen der Amplitude (A) des Impulses (102), **dadurch gekennzeichnet,**
**daß** zu jedem Referenzsignal ($149_i$) bzw. Referenzsatz ($205_1$) auch die Amplitude ($A_i$) des zugehörigen Referenzimpulses ($148_1$) zur Verfügung gestellt wird, und
**daß** die Amplitude ($A_i$) jenes Referenzimpulses ($148_i$), welcher zum ermittelten Referenzsignal ($149_i$) bzw. Referenzsatz ($205_1$) gehört, als Amplitude (A) des Impulses (102) ausgegeben wird.

18. Verfahren nach einem der Ansprüche 10 bis 17, **dadurch gekennzeichnet, daß** für den Impuls (102) zumindest ein weiteres Empfangssignal ($108_3$) aus einem Betriebszustand zumindest eines Empfangskanals ($108_3$) gewonnen, mit weiteren auf diese Weise zuvor für Referenzimpulse ($148_i$) gewonnenen Referenzsignalen ($149_i$, $149_{i,n}$) verglichen und in die Ermittlung der Vergleichsabweichung ($v_{i,t}$, $v'_{i,t}$) einbezogen wird.

19. Verfahren nach einem der Ansprüche 10 bis 18, **dadurch gekennzeichnet, daß** Referenzsignale ($149_i$) bzw. Referenzsätze ($205_i$) für verschiedene Betriebstemperaturen ($T_1$, $T_2$) zur Verfügung gestellt und daraus die für die jeweils aktuelle Betriebstemperatur gültigen Referenzsignale ($149_i$) bzw. Referenzsätze ($205_i$), erforderlichenfalls durch Inter- oder Extrapolation, ermittelt werden.

20. Verfahren nach einem der Ansprüche 10 bis 19, **dadurch gekennzeichnet, daß** die Ermittlung der minimalen Vergleichsabweichung ($v_{i,t}$, $v'_{i,t}$) mittels eines Least-Squares-Verfahren erfolgt, in welches vorgebbare Gewichtungswerte (g) für die Referenzsignale ($149_i$) bzw. Referenzsätze ($205_i$) Eingang finden.

**Claims**

1. Device (101, 201) for measuring the time of receipt (t) of a pulse (102) in a receiving system (6-8, 103, 203, 203', 203") which comprises at least one receiving channel (6-8, 104, $104_n$) having non-linear transient response, which supplies a received signal (108, $108_n$) at the output (10, 107, $207_n$) thereof, **characterised by**
a memory (28, 128), in which the received signals

of reference pulses ($148_i$) of preset different amplitudes ($A_i$) are present as reference signals ($149_i$, $149_{i,n}$) based on a time scale (T), and

an evaluation means (21, 121), which is connected to the receiving system and the memory and compares a received signal (108, $108_n$) with each reference signal ($149_i$, $149_{i,n}$) at a varying time offset (t), in order to detect that reference signal ($148_i$) and that time offset (t) at which the comparison deviation ($v_{i,t}$, $v'_{i,t}$) is minimal, and outputs this time offset as the time of receipt (t) with respect to the time scale (T).

2. Device (201) according to claim 1 for measuring the time of receipt (t) of a pulse (102) of high dynamic span in a receiving system (203, 203', 203") which comprises at least two parallel receiving channels ($104_n$) having different sensitivity, which supply at the outputs ($207_n$) thereof a set of time-parallel received signals ($108_n$), **characterised in that**
the sets of received signals of reference pulses ($148_i$) of preset different amplitudes ($A_i$) are present in the memory (128) as reference sets ($205_i$) based on a time scale (T), and
the evaluation means (121) connected to the receiving system (203, 203', 203") and the memory (128) compares a set of received signals ($108_n$) with each reference set ($205_i$) at a varying time offset (t), in order to detect that reference set ($205_i$) and time offset (t) at which the comparison deviation ($v_{i,t}$, $v'_{i,t}$) is minimal, and outputs this time offset as the time of receipt (t) with respect to the time scale (T).

3. Device according to either claim 1 or claim 2, **characterised in that** the receiving channel(s) (6-8, 104, $104_n$) are analogue and the memory (28, 128) and the evaluation means (21, 121) are digital, an analogue-to-digital converter (9, 109, $109_n$) being located at the outlet of each receiving channel (6-8, 104, $104_n$).

4. Device according to claim 3, **characterised in that** the reference signals ($149_i$) or reference sets ($205_i$) in the memory (28, 128) are present in a high first time resolution ($T_m$, $T_h$),
**in that** the receiving signal(s) (108, $108_n$) of an pulse (102) having a low second time resolution ($T_a$) are sampled, and
**in that** the evaluation means (21, 121) varies the time offset (t) in the resolution steps ($T_m$, $T_h$) of the high first time resolution ($T_m$, $T_h$).

5. Device according to any one of claims 1 to 4 for additionally measuring the amplitude (A) of the pulse (102), **characterised in that** the memory (28, 128) also comprises the amplitude ($A_i$) of the reference pulse ($148_i$) associated with each reference signal ($149_i$) or reference set ($205_i$), and the evaluation means (21, 121) outputs, as an amplitude (A) of the pulse (102), the amplitude ($A_i$) of each reference pulse ($148_i$) which is associated with the detected reference signal ($149_i$) or reference set ($205_i$).

6. Device according to any one of claims 1 to 5, **characterised in that** the evaluation means (21, 121) also outputs, as a quality measure of the measurement, the associated comparison deviation ($v_{i,t}$, $v'_{i,t}$) for a measured time of receipt (t).

7. Device according to any one of claims 1 to 6, **characterised in that** it comprises at least one sensor (206, 208) which measures an operating state of one or more receiving channels ($104_3$) and provides the operating state at the output ($207_3$) of the sensor as if it were a further received signal ($108_3$),
**in that** the memory (128) comprises further received signals ($108_3$) of this type of the reference pulses ($148_i$) as further received signals ($149_i$, $149_{i,n}$), and
**in that**, in said comparison, the evaluation means (21, 121) also compares a further received signal ($108_3$) of this type with the further received signals ($149_i$, $149_{i,n}$) and includes it in the detection of the comparison deviation ($v_{i,t}$, $v'_{i,t}$).

8. Device according to any one of claims 1 to 7, **characterised in that** it comprises at least one sensor which measures the operating temperatures of one or more receiving channels (6-8, 104, $104_n$),
**in that** the memory (25-28, 128) comprises reference signals ($205_i$) or reference sets for different operating temperatures ($T_1$, $T_2$), and
**in that** the evaluation means detects therefrom the reference signals ($149_i$) or reference sets ($205_i$) which are valid for the current operating temperature in each case, if necessary by interpolation or extrapolation, and uses them in said comparison.

9. Device according to any one of claims 1 to 8, **characterised in that** the memory (28, 128) further comprises weighting values (g) for the reference signals ($149_i$) or reference sets ($205_i$), which weighting values are included in the detection of the minimal comparison deviation ($v_{i,t}$, $v'_{i,t}$) by means of a least squares procedure.

10. Method for measuring the time of receipt (t) of a pulse (102) in a receiving system (6-8, 103, 203, 203', 203") which comprises at least one receiving channel (6-8, 104, $104_n$) having non-linear transient response, which supplies a received signal (108, $108_n$) at the output (10, 107, $207_n$) thereof, **characterised by** the steps of
providing stored received signals of reference pulses ($148_i$) of preset different amplitudes ($A_i$) as reference signals ($149_i$, $149_{i,n}$) based on a time scale (T),
comparing a received signal (108, $108_n$) with each reference signal ($149_i$, $149_{i,n}$) at a varying time offset (t), in order to detect that reference signal ($148_i$) and that time offset (t) at which the comparison deviation ($v_{i,t}$, $v'_{i,t}$) is minimal, and

outputting this time offset as the time of receipt (t) with respect to the time scale (T).

11. Method according to claim 10 for measuring the time of receipt (t) of a pulse (102) of high dynamic span in a receiving system (203, 203', 203") which comprises at least two parallel receiving channels ($104_n$) having different sensitivity, which supply a set of time-parallel received signals ($108_n$) at the outputs ($207_n$) thereof, **characterised by** the steps of providing stored sets of received signals of reference pulses ($148_i$) of preset different amplitudes ($A_i$) as reference sets ($205_i$) based on a time scale (T), comparing a set of received signals ($108_n$) with each reference set ($205_i$) at a varying time offset (t), in order to detect that reference set ($205_i$) and time offset (t) at which the comparison deviation ($v_{i,t}$, $v'_{i,t}$) is minimal, and

outputting this time offset as the time of receipt (t) with respect to the time scale (T).

12. Method according to either claim 10 or claim 11, **characterised**

**in that** the reference signals ($149_i$) or reference sets ($205_i$) are provided in a high first time resolution ($T_m$, $T_h$),

**in that** the received signal(s) (108, $108_n$) having a low second time resolution ($T_a$) are sampled, and **in that** the high first time resolution ($T_m$, $T_h$) is varied when comparing the time offset (t) in the resolution steps ($T_m$, $T_h$).

13. Method according to claim 12, **characterised in that** a provided reference signal ($149_i$, $149_{i,n}$) is generated by using a plurality of reference pulses ($148_i$) of the same type which are temporally offset to a high time resolution ($T_m$) in the resolution step, of which reference pulses the received signals (108) having a low time resolution ($T_a$) are sampled and are combined with the reference signal ($149_i$) in a meshed manner.

14. Method according to clam 13, **characterised in that** the combined reference signal ($149_i$) is brought to an even higher time resolution ($T_h$) by the introduction of interpolation values (111).

15. Method according to any one of claims 12 to 14, **characterised in that** the first time resolution ($T_m$, $T_h$) is in the order of picoseconds and the second time resolution ($T_a$) is in the order of nanoseconds.

16. Method according to any one of claims 10 to 15 for measuring the transit time of a pulse (102) from a transmitting system (2-5) to the receiving system (6-8, 103, 203, 203', 203"), **characterised in that** the time scale (T) is based on the time of transmission of the pulse (102) from the transmission system (2-5), in order to obtain the transit time from the time offset (t).

17. Method according to any one of claims 10 to 16 for additionally measuring the amplitude (A) of the pulse (102), **characterised**

**in that** each reference signal ($149_i$) or reference set ($205_i$) is also provided with the amplitude ($A_i$) of the associated reference pulse ($148_i$), and

**in that** the amplitude ($A_i$) of each reference pulse ($148_i$) associated with the detected reference signal ($149_i$) or reference set ($205_i$) is output as amplitude (A) of the pulse (102).

18. Method according to any one of claims 10 to 17, **characterised in that** at least one further received signal ($108_3$) from an operating state of at least one receiving channel ($108_3$) is obtained for the pulse (102), compared with further reference signals ($149_i$, $149_{i,n}$) previously obtained in this way for reference pulses ($148_i$) and included in the detection of the comparison deviation ($v_{i,t}$, $v'_{i,t}$).

19. Method according to any one of claims 10 to 18, **characterised in that** the reference signals ($149_i$) or reference sets ($205_i$) are provided for different operating temperatures ($T_1$, $T_2$) and the reference signals ($149_i$) or reference sets ($205_i$) which are valid for the current operating temperature in each case are detected therefrom, if necessary by interpolation or extrapolation.

20. Method according to any one of claims 10 to 19, **characterised in that** the minimal comparison deviation ($v_{i,t}$, $v'_{i,t}$) is detected by means of a least squares procedure in which weighting values (g), which can be preset, for the reference signals ($149_i$) or reference sets ($205_i$) are included.

**Revendications**

1. Dispositif (101, 201) pour la mesure de l'instant de réception (t) d'une impulsion (102) dans un système de réception (6 - 8, 103, 203, 203', 203") qui contient au moins un canal de réception (6 - 8, 104, $104_n$) avec un comportement de transmission non linéaire, lequel délivre à sa sortie (10, 107, $207_n$) un signal de réception (108, $108_n$), **caractérisé par**

une mémoire (28, 128) dans laquelle se trouvent les signaux de réception d'impulsions de référence ($148_i$) de différentes amplitudes prédéfinies ($A_i$) comme signaux de référence ($149_i$, $149_{i,n}$) rapportés à une échelle de temps (T) et

un dispositif d'évaluation (21, 121) branché au système de réception et à la mémoire, lequel dispositif d'évaluation compare un signal de réception (108, $108_n$) à chaque signal de référence ($149_i$, $149_{i,n}$) avec un décalage de temps (t) qui varie, pour déterminer ce signal de référence ($148_i$) et ce décalage de temps (t) pour lesquels l'écart de comparaison ($v_{i,t}$, $v'_{i,t}$) est minimal, et sort ce décalage de temps comme instant de réception (t) rapporté à l'échelle de temps (T).

2. Dispositif (201) selon la revendication 1 pour la mesure de l'instant de réception (t) d'une impulsion (102) d'une grande étendue dynamique, dans un système de réception (203, 203', 203") qui contient au moins deux canaux de réception ($104_n$) parallèles avec des sensibilité différentes, lesquels délivrent à leurs sorties ($207_n$) un bloc de signaux de réception ($108_n$) chronologiquement parallèles, **caractérisé en ce que**

dans la mémoire (128) se trouvent les blocs de signaux de réception d'impulsions de référence ($148_i$), de différentes amplitudes prédéfinies ($A_i$) comme blocs de référence ($205_i$) rapportés à une échelle de temps (T) et **en ce que** le dispositif d'évaluation (121) branché au système de réception (203, 203', 203") et à la mémoire (128) compare un bloc de signaux de réception ($108_n$) à chaque bloc de référence ($205_i$) moyennant un décalage de temps (t) variable, pour déterminer ce bloc de référence ($205_i$) et ce décalage de temps (t) pour lesquels l'écart de comparaison ($v_{i,t}$, $v'_{i,t}$) est minimal, et sort ce décalage de temps comme instant de réception (t) rapporté à l'échelle de temps (T).

3. Dispositif selon la revendication 1 ou 2, **caractérisé en ce que** le ou les canaux de réception (6 - 8, 104, $104_n$) sont de nature analogique et **en ce que** la mémoire (28, 128) et le dispositif d'évaluation (21, 121) sont de nature numérique, sachant qu'il y a un convertisseur analogique/numérique (9, 109, $109_n$) à la sortie de chaque canal de réception (6 - 8, 104, $104_n$).

4. Dispositif selon la revendication 3, **caractérisé en ce que** les signaux de référence ($149_i$), respectivement les blocs de référence ($205_i$) se trouvent dans la mémoire (28, 128) dans une première haute résolution en temps ($T_m$, $T_h$),
**en ce que** le, respectivement les signaux de réception (108, $108_n$) d'une impulsion (102) sont palpés avec une deuxième résolution en temps ($T_a$) plus basse et
**en ce que** le dispositif d'évaluation (21, 121) fait varier le décalage de temps (t) dans les pas de résolution ($T_m$, $T_h$) de la première haute résolution en temps ($T_m$, $T_h$).

5. Dispositif selon l'une quelconque des revendications 1 à 4, pour la mesure supplémentaire de l'amplitude (A) de l'impulsion (102), **caractérisé en ce que** la mémoire (28, 128) contient aussi pour chaque signal de référence ($149_i$), respectivement chaque bloc de référence ($205_i$), l'amplitude ($A_i$) de l'impulsion de référence ($148_i$) correspondante et **en ce que** le dispositif d'évaluation (21, 121) sort l'amplitude ($A_i$) de celle des impulsions de référence ($148_i$) qui appartient au signal de référence ($149_i$), respectivement au bloc de référence ($205_i$), déterminé, comme amplitude (A) de l'impulsion (102).

6. Dispositif selon l'une quelconque des revendications 1 à 5, **caractérisé en ce que** le dispositif d'évaluation (21, 121) sort aussi, pour un instant de réception (t) mesuré, l'écart correspondant d'avec la comparaison ($v_{i,t}$, $v'_{i,t}$) comme valeur chiffrée de la qualité de la mesure.

7. Dispositif selon l'une quelconque des revendications 1 à 6, **caractérisé en ce qu'**il contient au moins un capteur (206, 208) qui mesure un état de fonctionnement d'un ou de plusieurs canaux de réception ($104_3$) et qui les fournit de même à sa sortie ($207_3$) comme signal de réception ($108_3$) supplémentaire, **en ce que** la mémoire (128) contient de tels signaux de réception ($108_3$) supplémentaires des impulsions de référence ($148_i$) comme autres signaux de référence ($149_i$, $149_{i,n}$) et

**en ce que**, lors de la comparaison susmentionnée, le dispositif d'évaluation (21, 121) compare aussi aux autres signaux de référence ($149_i$, $149_{i,n}$) un tel autre signal de réception ($108_3$) et en tient compte dans la détermination de l'écart d'avec la comparaison ($v_{i,t}$, $v'_{i,t}$).

8. Dispositif selon l'une quelconque des revendications 1 à 7, **caractérisé en ce qu'**il contient au moins un capteur qui mesure la température de service d'un ou de plusieurs canaux de réception (6 - 8, 104, $104_n$),
**en ce que** la mémoire (25 - 28, 128) contient des signaux de référence ($205_i$), respectivement des blocs de référence pour différentes températures de service ($T_1$, $T_2$) et
**en ce que** le dispositif d'évaluation en détermine les signaux de référence ($149_i$), respectivement les blocs de référence ($205_i$) valables pour la température momentanée dans chaque cas, si nécessaire par inter- ou par extrapolation, et les utilise pour la comparaison susmentionnée.

9. Dispositif selon l'une quelconque des revendications 1 à 8, **caractérisé en ce que** la mémoire (28, 128) contient en outre des valeurs de pondération (g) pour les signaux de référence ($149_i$), respectivement pour les blocs de référence ($205_i$), auxquelles il est fait appel dans la détermination, par un procédé des moindres carrés, de l'écart minimal d'avec la comparaison ($v_{i,t}$, $v'_{i,t}$).

**10.** Procédé pour la mesure de l'instant de réception (t) d'une impulsion (102) dans un système de réception (6 - 8, 103, 203, 203', 203") qui contient au moins un canal de réception (6 - 8, 104, $104_n$) avec un comportement de transmission non linéaire, lequel délivre à sa sortie (10, 107, $207_n$) un signal de réception (108, $108_n$), **caractérisé par** les étapes :

mise à disposition de signaux enregistrés de réception d'impulsions de référence ($148_i$) prédéfinies de différentes amplitudes ($A_i$), comme signaux de référence ($149_i$, $149_{i,n}$), rapportés à une échelle de temps (T),
comparaison d'un signal de réception (108, $108_n$) à chaque signal de référence ($149_i$, $149_{i,n}$), moyennant un décalage de temps (t) variable, pour déterminer ce signal de référence ($148_i$) et ce décalage de temps (t) pour lesquels l'écart de comparaison ($v_{i,t}$, $v'_{i,t}$) est minimal, et sortie de ce décalage de temps comme instant de réception (t) rapporté à l'échelle de temps (T).

**11.** Procédé selon la revendication 10 pour la mesure de l'instant de réception (t) d'une impulsion (102) d'une grande étendue dynamique dans un système de réception (203, 203', 203") qui contient au moins deux canaux de réception ($104_n$) parallèles avec des sensibilité différentes, lesquels délivrent à leurs sorties ($207_n$) un bloc de signaux de réception ($108_n$) chronologiquement parallèles, **caractérisé par** les étapes :

mise à disposition de blocs enregistrés de signaux de réception d'impulsions de référence ($148_i$), de différentes amplitudes prédéfinies ($A_i$), comme blocs de référence ($205_i$) rapportés à une échelle de temps (T),
comparaison d'un bloc de signaux de réception ($108_n$) à chaque bloc de référence ($205_i$) moyennant un décalage de temps (t) variable, pour déterminer ce bloc de référence ($205_i$) et ce décalage de temps (t) pour lesquels l'écart de comparaison ($v_{i,t}$, $v'_{i,t}$) est minimal,, et sortie de ce décalage de temps comme instant de réception (t) rapporté à l'échelle de temps (T).

**12.** Procédé selon la revendication 10 ou 11, **caractérisé en ce que** les signaux de référence ($149_i$), respectivement les blocs de référence ($205_i$) sont mis à disposition dans une haute première résolution en temps ($T_m$, $T_h$),
**en ce que** le ou les signaux de réception (108, $108_n$) sont palpés avec une deuxième résolution en temps ($T_a$) plus basse, et
**en ce que** lors de la comparaison, le décalage de temps (t) est varié dans les pas de résolution ($T_m$, $T_h$) de la haute première résolution en temps ($T_m$, $T_h$).

**13.** Procédé selon la revendication 12, **caractérisé en ce qu'**un signal de référence ($149_i$, $149_{i,n}$) mis à disposition est produit, moyennant l'utilisation de plusieurs impulsions de référence ($148_i$) de même nature, décalées dans le temps par des pas de résolution qui correspondent à une haute résolution en temps ($T_m$), impulsions dont les signaux de réception (108) sont palpés avec une résolution en temps ($T_a$) basse et sont combinés par ratissage pour donner le signal de référence ($149_i$).

**14.** Procédé selon la revendication 13, **caractérisé en ce que** le signal de référence ($149_i$) combiné est amené par intercalage de valeurs d'interpolation (111) à un niveau de résolution dans le temps ($T_h$) encore plus élevé.

**15.** Procédé selon l'une quelconque des revendications 12 à 14, **caractérisé en ce que** la première résolution en temps ($T_m$, $T_h$) est de l'ordre de la picoseconde et **en ce que** la deuxième résolution en temps ($T_a$) de l'ordre de la nanoseconde.

**16.** Procédé selon l'une quelconque des revendications 10 à 15 pour la mesure du temps de vol d'une impulsion (102) d'un système d'émission (2 - 5) au système de réception (6 - 8, 103, 203, 203', 203"), **caractérisé en ce que** l'échelle de temps (T) est rapportée à l'instant d'émission de l'impulsion (102) depuis le système d'émission (2 - 5), pour obtenir le temps de vol à partir du décalage de temps (t).

**17.** Procédé selon l'une quelconque des revendications 10 à 16, pour mesurer en plus l'amplitude (A) de l'impulsion (102), **caractérisé en ce que**
à chaque signal de référence ($149_i$), respectivement chaque bloc de référence ($205_i$), l'amplitude ($A_i$) de l'impulsion de référence ($148_i$) correspondante est aussi mise à disposition et
**en ce que** l'amplitude ($A_i$) de celle des impulsions de référence ($148_i$) qui appartient au signal de référence ($149_i$), respectivement au bloc de référence ($205_i$) émis est sortie comme amplitude (A) de l'impulsion (102).

**18.** Procédé selon l'une quelconque des revendications 10 à 17, **caractérisé en ce que** pour l'impulsion (102), au moins un autre signal de réception ($108_3$) est obtenu à partir d'un état de service d'au moins un canal de réception ($108_3$), **en ce qu'**il est comparé à d'autres signaux de référence ($149_i$, $149_{i,n}$) obtenus auparavant de cette façon pour les impulsions de référence ($148_i$), et **en ce qu'**il est pris en compte dans la détermination de l'écart d'avec la comparaison ($v_{i,t}$, $v'_{i,t}$).

**19.** Procédé selon l'une quelconque des revendications 10 à 18, **caractérisé en ce que** les signaux de référence ($149_i$), respectivement les blocs de référence ($205_i$) sont mis à disposition pour différentes températures de service ($T_1$, $T_2$), et **en ce que** de là, les signaux de référence ($149_i$), respectivement les blocs de référence ($205_i$) valables pour la température de service momentanée respective sont déterminés, si nécessaire par inter- ou par extrapolation.

**20.** Procédé selon l'une quelconque des revendications 10 à 19, **caractérisé en ce que** la détermination de l'écart minimal d'avec la comparaison ($v_{i,t}$, $v'_{i,t}$) s'effectue par un procédé des moindres carrés dans lequel on fait appel à des valeurs de pondération (g) pour les signaux de référence ($149_i$), respectivement pour les blocs de référence ($205_i$).

*Fig. 1*

*Fig. 2*

*Fig. 3*

*Fig. 4*

**Fig. 5**

**Fig. 6**

**Fig. 7**

*Fig. 8*

## Fig. 9

## Fig. 10

**Fig. 11a**

**Fig. 11b**

**Fig. 12a**

**Fig. 12b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1034602 A2
- DE 102005033403 A1
- DE 19611233 A1
- EP 1329739 A2